# EUROPÄISCHE PATENTANMELDUNG

(11) **EP 3 882 055 A1**
(43) Veröffentlichungstag der Anmeldung: **22.09.2021**
(21) Anmeldenummer: 21173107.0
(22) Anmeldetag: 28.08.2018
(51) Int. Cl.: B60D 1/06, B60D 1/60, B60D 1/64

(54) **ANHÄNGEKUPPLUNG**

(30) Priorität: 14.09.2017 DE 102017121369
(62) Teilanmeldung aus: 18191279.1
(71) Anmelder: ACPS Automotive GmbH, 74379 Ingersheim (DE)
(72) Erfinder: Burkhardt, Volker, 71696 Möglingen (DE); Widmann, Michael, 71229 Leonberg (DE)
(74) Vertreter: Hoeger, Stellrecht & Partner Patentanwälte mbB

(57) **Zusammenfassung**

Die Erfindung betrifft eine Anhängekupplung umfassend eine fahrzeugfest montierte Monatgeeinheit, eine an der Montageeinheit gehaltene Lagereinheit, mit welcher ein erster Endbereich einer Tragstruktur eines Kugelhalses verbunden ist, und ein an einem zweiten Endbereich der Tragstruktur des Kugelhalses angeordnetes Kuppelelement, insbesondere ausgebildet als Kupplungskugel, wobei die Tragstruktur in einer Arbeitsstellung eine einer Fahrbahn abgewandte Oberseite, eine der Fahrbahn zugewandte Unterseite und beiderseits derselben zwischen diesen liegende Längsseiten umfasst, wobei die Tragstruktur mit einer Verkleidung versehen ist, welche mindestens eine der Seiten zumindest in einem zwischen dem ersten Endbereich und dem zweiten Endbereich liegenden Teilbereich mit einer Abdeckung überdeckt.

## Beschreibung

Die Erfindung betrifft eine Anhängekupplung umfassend eine fahrzeugfest montierte Montageeinheit, eine an der Montageeinheit gehaltene Lagereinheit, mit welcher ein erster Endbereich einer Tragstruktur eines Kugelhalses verbunden ist, und ein an einem zweiten Endbereich der Tragstruktur des Kugelhalses angeordnetes Kuppelelement, insbesondere ausgebildet als Kupplungskugel, wobei die Tragstruktur in einer Arbeitsstellung eine einer Fahrbahn abgewandte Oberseite, eine der Fahrbahn zugewandte Unterseite und beiderseits derselben zwischen diesen liegende Längsseiten umfasst.

Bei derartigen Anhängekupplungen besteht das Problem, der Tragstruktur ein möglichst gefälliges Aussehen zu verleihen.

Dieses Problem wird erfindungsgemäß dadurch gelöst, dass die Tragstruktur mit einer Verkleidung versehen ist, welche mindestens eine der Seiten zumindest in einem zwischen dem ersten Endbereich und dem zweiten Endbereich liegenden Teilbereich mit einer Abdeckung überdeckt.

Eine derartige Abdeckung schafft die Möglichkeit, an insbesondere der einen Seite der Tragstruktur ein gefälliges Aussehen zu verleihen.

Noch vorteilhafter ist es, wenn die Verkleidung mindestens eine der Seiten zumindest in dem gesamten zwischen dem ersten Endbereich und dem zweiten Endbereich liegenden Teilbereich mit der Abdeckung übergreift.

Ferner ist vorzugsweise vorgesehen, dass die Verkleidung einander gegenüberliegende Seiten zumindest in einem zwischen dem ersten Endbereich und dem zweiten Endbereich liegenden Teilbereich mit jeweils einer Abdeckung übergreift.

Noch vorteilhafter ist es, wenn die Verkleidung beide einander gegenüberliegende Seiten zumindest im gesamten, zwischen dem ersten Endbereich und dem zweiten Endbereich liegenden Teilbereich jeweils mit einer Abdeckung übergreift.

Eine für die Tragstruktur nicht tragende Verkleidung oder Abdeckung bedeutet, dass die Verkleidung oder Abdeckung auf die mechanischen Eigenschaften der Tragstruktur keinen oder nur unwesentlichen Einfluss hat und somit insbesondere die Tragstruktur nicht zusätzlich wesentlich versteift, um deren mechanische Eigenschaften zu verbessern. Nicht wesentlich versteift bedeutet dabei, dass sich die Steifigkeit der Tragstruktur oder der Abdeckung um weniger als 10 % durch die vorgesehene Verkleidung oder Abdeckung erhöht.

Eine derartige Verkleidung oder Abdeckung schafft somit die Möglichkeit, mit einfachen Mitteln dem Kugelhals ein gefälliges Aussehen zu verleihen und gleichzeitig noch die Funktionseinheit in ihrer Zuordnung relativ zum Kugelhals zu halten.

Darüber hinaus schafft das Vorsehen der Abdeckung die Möglichkeit, die Funktionseinheit zu schützen, beispielsweise gegen Wasserstrahlen und/oder Steinschläge.

Besonders günstig ist ferner eine Ausführung der Verkleidung, die lackierbare Oberflächenbereiche umfasst, so dass diese beispielsweise in der Fahrzeugfarbe lackiert werden können.

Besonders günstig lässt sich eine mindestens derartige Abdeckung einsetzen, wenn die Tragstruktur Freiräume, also gegenüber deren Außenkontur, insbesondere deren Längsseiten, in die Tragstruktur sich hineinerstreckende und nicht durch Elemente der Tragstruktur ausgefüllte Freiräume aufweist, und dass die Verkleidung zumindest einen Teil der Freiräume abdeckt.

Diese Lösung bietet die Möglichkeit, in der Tragstruktur Freiräume auszubilden und vorzusehen, die beispielsweise zu einer Gewichtsreduzierung oder zur Aufnahme von Funktionseinheiten dienen können, jedoch durch die mindestens eine Abdeckung zumindest zum Teil abgedeckt werden, so dass diese von außen nicht ersichtlich sind.

Noch vorteilhafter ist es, wenn die mindestens eine Abdeckung sämtliche Freiräume der Tragstruktur abdeckt, so dass dadurch in besonders einfacher Weise das ästhetische Erscheinungsbild des Kugelhalses verbessert werden kann.

Besonders vorteilhaft ist es dabei auch, wenn mindestens ein Teil der Freiräume durch die mindestens zwei, insbesondere im Bereich der beiderseitigen Längsseiten angeordneten Abdeckungen überdeckt sind.

Die mindestens eine Abdeckung kann beispielsweise aus einem flexiblen oder weichen Material hergestellt sein, welches die Tragstruktur ganz oder teilweise umhüllt, das heißt beispielsweise ganz oder teilweise um die Tragstruktur herum gewickelt ist.

Besonders vorteilhaft ist es jedoch, wenn die Verkleidung mindestens eine struktursteife Abdeckung, beispielsweise in Form eines oder mehrerer geformter Kunststoffteile umfasst, die einerseits die Möglichkeit einer gewünschten Formgebung zulassen und andererseits für den dauerhaften Einsatz an einem Kugelhals unter rauen Umgebungsbedingungen geeignet sind.

Im Fall einer struktursteifen Abdeckung heißt dies nicht, dass die Abdeckung zur Steifigkeit der Tragstruktur beiträgt.

Eine besonders einfache und daher vorteilhafte Lösung sieht vor, dass die Verkleidung und insbesondere die Abdeckung als eine für die Tragstruktur nicht tragende Verkleidung oder insbesondere Abdeckung ausgebildet ist.

Beispielsweise ist die Abdeckung dann, wenn sie ein Kunststoffteil ist, zwar eigensteif und formsteif, so dass durch die Abdeckung die Form der Verkleidung vorgegeben werden kann, sie leistet jedoch keinen Beitrag zu der Steifigkeit der Tragstruktur.

Daher ist beispielsweise vorgesehen, dass die Abdeckung ein nichttragendes Element des Kugelhalses ist.

Eine andere vorteilhafte Lösung sieht vor, dass die Verkleidung eine die Steifigkeit der Tragstruktur erhöhende Abdeckung aufweist.

In diesem Fall soll die Abdeckung nicht nur dazu eingesetzt werden, das ästhetische Erscheinungsbild des Kugelhalses zu verbessern, sondern auch zur Steifigkeit der Tragstruktur beitragen, insbesondere die Steifigkeit der Tragstruktur verbessern.

Dies ist beispielsweise dann sinnvoll, wenn die Abdeckung die Strebenstruktur dergestalt ergänzt, dass eine Torsionssteifigkeit der Strebenstruktur erhöht werden kann, was insbesondere dadurch möglich ist, dass die Abdeckung die Strebenstruktur zu einer rohrähnlichen Struktur ergänzt, also insbesondere eines oder mehrere außenliegende Abdeckungsteile die Strebenstruktur zu einer Rohrstruktur ergänzen, da insbesondere eine Rohrstruktur eine vorteilhafte Torsionssteifigkeit aufweist.

Vorzugsweise ist hierbei vorgesehen, dass die Abdeckung aus einem formsteifen Material hergestellt ist.

Ein derartiges formsteifes Material könnte beispielsweise ein kohlefaserverstärktes Material sein.

Aus Kostengründen und aus herstellungstechnischen Gründen ist es jedoch vorteilhaft, wenn die Abdeckung aus Metall, beispielsweise aus Metallblech oder aus einem durch Umformen hergestellten Metallformstück, hergestellt ist.

Hinsichtlich der Verbindung der Abdeckung mit der Strebenstruktur wurden bislang keine näheren Angaben gemacht.

So wäre es grundsätzlich denkbar, eine Verbindung zwischen der Abdeckung und der Strebenstruktur durch Verbindungselemente herzustellen. Eine derartige Verbindung ist jedoch für eine Verbindung zweier Teile zur Erhöhung der Steifigkeit lediglich bedingt geeignet.

Besonders vorteilhaft ist es daher, wenn die Abdeckung stoffschlüssig mit der Strebenstruktur verbunden ist.

Eine derartige stoffschlüssige Verbindung zwischen der Abdeckung und der Strebenstruktur wird insbesondere durch Schweißen oder durch Kleben erreicht, so dass dadurch die Strebenstruktur durch die Abdeckung gegen Biegebewegungen und vorzugsweise auch insbesondere Torsionsbewegungen zusätzlich versteift werden kann.

Hinsichtlich der Verkleidung der Freiräume im Fall einer Abdeckung wurden im Zusammenhang mit der bisherigen Erläuterung der einzelnen Ausführungsformen keine näheren Angaben gemacht.

Eine besonders vorteilhafte Lösung sieht daher vor, dass die mindestens eine Abdeckung die Freiräume der Strebenstruktur überdeckt.

Besonders günstig ist es, wenn die Verkleidung mindestens zwei Abdeckungen umfasst, welche die Tragstruktur im Bereich ihrer Seiten, insbesondere im Bereich einander gegenüberliegenden Seiten, und insbesondere im Bereich ihrer Freiräume überdeckt.

Dabei ist mindestens vorgesehen, dass ein Teil der Freiräume durch die mindestens zwei Abdeckungen überdeckt ist.

Besonders vorteilhaft ist es, wenn sämtliche Freiräume der Strebenstruktur durch die mindestens zwei Abdeckungen überdeckt sind.

Hinsichtlich der Fixierung der mindestens einen Abdeckung wurden bislang keine näheren Angaben gemacht.

So sieht eine vorteilhafte Lösung vor, dass die mindestens eine Abdeckung an der Tragstruktur gehalten ist.

Im Fall mehrerer Abdeckungen ist vorzugsweise vorgesehen, dass die mehreren Abdeckungen einzeln an der Tragstruktur gehalten sind.

Andererseits besteht die Möglichkeit, die Abdeckungen durch eine mindestens einen der Freiräume der Tragstruktur durchsetzende Verbindungseinheit miteinander verbunden sind, so dass insbesondere die Tragstruktur zwischen zwei einander gegenüberliegenden Abdeckungen angeordnet ist.

Hinsichtlich der relativen Anordnung der mindestens einen Abdeckung relativ zur Tragstruktur wurden bislang keine näheren Angaben gemacht.

So sieht eine vorteilhafte Lösung vor, dass die Tragstruktur Anlagenkonturen für die mindestens eine Abdeckung bildet, so dass die Abdeckung sich in einfacher Weise relativ zur Tragstruktur abstützen und/oder fixieren lässt.

Besonders günstig ist es, wenn die Tragstruktur für die Abdeckungen eine zusammenhängende Anlagekontur bildet, längs welcher die mindestens eine Abdeckung mit Anlagebereichen abschließend anliegt. In diesem Fall lässt sich in besonders einfacher Weise eine vorteilhafte ästhetische Gestaltung des Kugelhalses durch die mindestens eine Abdeckung erreichen.

Das Vorsehen mehrerer Abdeckungen kann aber auch dazu dienen, eine insgesamt U-förmige Abdeckeinheit zu schaffen, welche beispielsweise auf einander gegenüberliegenden Seiten der Tragstruktur Abdeckungen aufweist, die durch einen Mittelschenkel der U-förmigen Abdeckeinheit miteinander verbunden sind, so dass die U-förmig ausgebildete Abdeckeinheit die Tragstruktur auf insgesamt drei Seiten übergreift, nämlich beispielsweise auf einer Seite mit dem Mittelschenkel und auf einander gegenüberliegenden Seiten mit den Seitenschenkeln der Abdeckeinheit bildenden Abdeckungen.

Eine weitere vorteilhafte Lösung im Fall von mehreren Abdeckungen, beispielsweise zwei Abdeckungen, sieht vor, dass sich diese Abdeckungen insgesamt zu einer Abdeckeinheit ergänzen, die die Tragstruktur außenseitig, insbesondere vollumfänglich, umgreift und somit eine geschlossene, die Tragstruktur aufnehmende Umhüllung für die Tragstruktur bildet.

Die Abdeckung lässt sich vorzugsweise noch dadurch vorteilhaft einsetzen, dass an der mindestens einen Abdeckung eine zu einer Sensoreinheit und/oder Funktionseinheit geführte elektrische Leitung gehalten ist, so dass mit der Abdeckung gleichzeitig eine derartige elektrische Leitung an der Tragstruktur montiert werden kann.

Darüber hinaus ist vorzugsweise vorgesehen, dass an der mindestens einen Abdeckung ein elektrisches Kontaktverbinderelement gehalten ist, welches ebenfalls dazu dient, einen elektrischen Kontakt zu mindestens einer Sensoreinheit und/oder mindestens Funktionseinheit herzustellen, wobei sich auch dieses elektrische Kontaktverbinderelement vorzugsweise zusammen mit der Abdeckung montieren lässt.

Die erfindungsgemäße Verkleidung lässt sich jedoch nicht nur dazu einsetzen, das ästhetische Aussehen der Tragstruktur zu verbessern.

Die erfindungsgemäße Verkleidung lässt sich ferner noch dazu einsetzen, die Sicherheit des Kugelhalses zu verbessern, nämlich dadurch, dass die Verkleidung auf einer der Tragstruktur abgewandten Seite eine weichelastische Auflage trägt.

Eine weichelastische Auflage ermöglicht es, die Verletzungsgefahr für einen Benutzer des Fahrzeugs und der Anhängekupplung zu verhindern, da sich durch die weichelastische Auflage insbesondere weiche und gerundete Außenkonturen der Verkleidung realisieren lassen, die die Verletzungsgefahr beispielsweise an Schienbeinen eines Nutzers des Fahrzeugs signifikant reduziert.

Besonders günstig ist es, wenn die weichelastische Auflage als Stoßdämpferkörper ausgebildet ist.

Eine weitere vorteilhafte Lösung sieht vor, dass der Stoßdämpferkörper an einer dem Fahrzeug abgewandten Rückseite der Tragstruktur angeordnet ist.

Ein derart angeordneter Stoßdämpfer schafft auch die Möglichkeit, für den Fall, dass der Nutzer des Fahrzeugs gegen ein Objekt fährt, das Gegenstoßen gegen das Objekt zu dämpfen.

Ferner ist vorzugsweise vorgesehen, dass der Stoßdämpferkörper auf einer fahrbahnzugewandten Seite der Tragstruktur angeordnet ist, so dass sich dadurch auch ein Aufsetzen der Tragstruktur auf einer unebenen Fahrbahn oder einer Fahrbahnerhöhung dämpfen lässt.

Bei der bisherigen Erläuterung der erfindungsgemäßen Lösung wurde davon ausgegangen, die Verkleidung nicht mit einer Funktionseinheit verbunden ist.

Besonders vorteilhaft lässt sich die Verkleidung dann einsetzen, wenn mindestens eine Funktionseinheit an der Verkleidung gehalten ist.

Insbesondere ist es vorteilhaft, wenn die mindestens eine Funktionseinheit mittels der Abdeckung relativ zu der Tragstruktur fixiert ist und somit in einfacher Weise an der Tragstruktur montiert werden kann.

Besonders günstig ist es, wenn die mindestens eine Funktionseinheit ausschließlich an der mindestens einen Abdeckung gehalten ist.

Noch vorteilhafter ist es, wenn die mindestens eine Funktionseinheit an mindestens zwei Abdeckungen gehalten ist.

Eine besonders vorteilhafte Lösung sieht vor, dass in diesem Fall die mindestens eine Funktionseinheit ein Verbindungselement zwischen den zwei Abdeckungen darstellt und somit die Abdeckungen in einfacher Weise relativ zueinander fixiert werden können.

Insbesondere ist es hierbei von Vorteil, wenn die Verbindungseinheit zwischen den Abdeckungen durch ein Gehäuse einer Funktionseinheit gebildet ist.

Hinsichtlich der tatsächlichen Verbindung zwischen der mindestens einen Funktionseinheit und der mindestens einen Abdeckung wurden bislang ebenfalls keine näheren Angaben gemacht.

So sieht eine besonders günstige Lösung vor, dass die mindestens eine Funktionseinheit in die mindestens eine Abdeckung integriert ist, so dass die mindestens eine Funktionseinheit und die mindestens eine Abdeckung eine Einheit bilden.

Hinsichtlich der Ausbildung der Funktionseinheit wurden bislang keine näheren Angaben gemacht.

Insbesondere ist die Funktionseinheit eine elektrische oder elektronische Funktionseinheit.

Beispielsweise sieht eine Lösung vor, dass die mindestens eine Funktionseinheit eine Kontakteinheit für eine Verbindung zwischen einem elektrischen Fahrzeugnetz und einem elektrischen Netz einer am Kuppelelement ankuppelbaren Einheit ist.

Eine andere vorteilhafte Lösung sieht vor, dass die Funktionseinheit eine Betriebszustandserfassungseinheit aufweist, welche beispielsweise Betriebszustände der Anhängekupplung und/oder der angehängten Einheit erfasst.

Ein Betriebszustand ist beispielsweise das Vorhandensein oder Nichtvorhandensein einer angehängten Einheit, beispielsweise eines Anhängers und/oder Funktionszustände eines elektrischen Netzes der angehängten Einheit.

Ein weiterer Betriebszustand ist beispielsweise eine Ausrichtung der angehängten Einheit, beispielsweise eines Anhängers relativ zu dem Kugelhals.

Ein weiterer Betriebszustand ist beispielsweise die Belastung des Kugelhalses, beispielsweise in Form einer statischen und/oder dynamischen Belastung des Kugelhalses in der Arbeitsstellung bei fahrendem und/oder nicht fahrendem Fahrzeug.

Ein weiterer Betriebszustand ist beispielsweise die Schwenkstellung des Kugelhalses bezogen auf die Arbeitsstellung und die Ruhestellung und auch zwischen diesen liegenden Zwischenstellungen.

Ein weiterer Betriebszustand ist beispielsweise auch ein Zustand einer Verriegelungsvorrichtung, mit welcher der zwischen der Arbeitsstellung und der Ruhestellung verschwenkbare Kugelhals in der Arbeitsstellung und/oder der Ruhestellung fixierbar ist.

Dabei ist insbesondere die Information relevant, ob die Verriegelungsvorrichtung im verriegelten oder nicht verriegelten Zustand ist oder ob die Verriegelungsvorrichtung in einem Zwischenstand zwischen diesen Zuständen ist.

Diese Betriebszustände werden beispielsweise durch den Lagereinheiten beziehungsweise den Verriegelungsvorrichtungen zugeordnete Sensoren erfasst.

Zur Erfassung all dieser Betriebszustände umfasst die Funktionseinheit eine Auswerteschaltung und mit der Auswerteschaltung zusammenwirkende Sensoreinheiten, wie beispielsweise
- Schalter, Positionssensoren und Drehwinkelsensoren zur Überwachung von Positionen und relativen Orientierungen;
- Stromsensoren zur Überwachung von einem elektrischen Netz der angehängten Einheit;
- Dehnungssensoren und/oder Schwingungssensoren und/oder Lagesensoren und/oder Beschleunigungssensoren zur Überwachung von statischen und/oder dynamischen Belastungen des Kugelhalses.

Eine andere vorteilhafte Lösung sieht vor, dass die Funktionseinheit eine Anzeigensteuerung umfasst, mit welcher eine Anzeigeeinheit ansteuerbar ist.

Eine weitere vorteilhafte Lösung sieht vor, dass die Funktionseinheit eine Anzeigeeinheit ist.

Beispielsweise sieht eine vorteilhafte Lösung vor, dass eine der Anzeigeeinheit vorgeschaltete Funktionseinheit eine Einheit zur Erfassung von Funktionsparametern des Kugelhalses ist, wie beispielsweise eine Einheit zur Erfassung einer Stützlast, die auf den Kugelhals wirkt, die insbesondere auch in einem der Freiräume der Tragstruktur oder im Kugelhals angeordnete Sensoreinheiten umfasst.

Die der Anzeigesteuerung vorgeschaltete Funktionseinheit kann aber auch eine Beschleunigungserfassungseinheit und/oder eine Anhängerüberwachungseinheit und/oder eine Knickwinkelerfassungseinheit sein.

Ein weiteres Ausführungsbeispiel einer Funktionseinheit umfasst eine Beleuchtungseinheit, wobei insbesondere deren Lichtquelle in einem der Freiräume angeordnet ist und deren Licht über Lichtleiter zu Lichtaustrittselementen geführt ist.

Ein weiteres Ausführungsbeispiel einer Funktionseinheit umfasst eine Projektionseinheit, umfassend eine Bilderzeugungseinheit, deren Bild von einem Projektionselement auf eine externe Projektionsfläche projiziert wird.

Die vorstehende Beschreibung erfindungsgemäßer Lösungen umfasst somit insbesondere die durch die nachfolgenden durchnummerierten Ausführungsformen definierten verschiedenen Merkmalskombinationen:
1. Anhängekupplung umfassend eine fahrzeugfest montierte Montageeinheit (42), eine an der Montageeinheit (42) gehaltene Lagereinheit (20), mit welcher ein erster Endbereich (24) einer Tragstruktur (60) eines Kugelhalses (22) verbunden ist, und ein an einem zweiten Endbereich (26) der Tragstruktur (60) des Kugelhalses (22) angeordnetes Kuppelelement (32), insbesondere ausgebildet als Kupplungskugel, wobei die Tragstruktur (60) in einer Arbeitsstellung eine einer Fahrbahn (34) abgewandte Oberseite, eine der Fahrbahn zugewandte Unterseite und beiderseits derselben zwischen diesen liegende Längsseiten umfasst, dadurch gekennzeichnet, dass die Tragstruktur (60) mit einer Verkleidung (120) versehen ist, welche mindestens eine der Seiten zumindest in einem zwischen dem ersten Endbereich (24) und dem zweiten Endbereich (26) liegenden Teilbereich mit einer Abdeckung (122, 124) überdeckt.
2. Anhängekupplung nach Ausführungsform 1, dadurch gekennzeichnet, dass die Verkleidung (120) mindestens eine der Seiten zumindest in dem gesamten zwischen dem ersten Endbereich (24) und dem zweiten Endbereich (26) liegenden Teilbereich mit der Abdeckung (122, 124) übergreift.
3. Anhängekupplung nach Ausführungsform 1 oder 2, dadurch gekennzeichnet, dass die Verkleidung beide einander gegenüberliegende Seiten zumindest in einem zwischen dem ersten Endbereich (24) und dem zweiten Endbereich (26) liegenden Teilbereich mit jeweils einer Abdeckung (122, 124) übergreift.
4. Anhängekupplung nach Ausführungsform 3, dadurch gekennzeichnet, dass die Verkleidung (120) beide einander gegenüberliegende Seiten zumindest im gesamten zwischen dem ersten Endbereich (24) und dem zweiten Endbereich (26) liegenden Teilbereich jeweils mit einer Abdeckung (122, 124) übergreift.
5. Anhängekupplung nach einer der voranstehenden Ausführungsformen, dadurch gekennzeichnet, dass die Tragstruktur (60) Freiräume (92, 94, 96, 98, 112, 114, 116) aufweist, die Verkleidung (120) zumindest einen Teil der Freiräume (92, 94, 96, 98, 112, 114, 116) abdeckt.
6. Anhängekupplung nach einer der voranstehenden Ausführungsformen, dadurch gekennzeichnet, dass die Verkleidung (120) mindestens eine struktursteife Abdeckung (122, 124) umfasst.
7. Anhängekupplung nach einer der voranstehenden Ausführungsformen, dadurch gekennzeichnet, dass die Verkleidung (120) als eine für die Tragstruktur (60) nicht tragende Verkleidung, ausgebildet ist.
8. Anhängekupplung nach Ausführungsform 7, dadurch gekennzeichnet, dass die mindestens eine Abdeckung (122, 124) ein nichttragendes Element des Kugelhalses (22) ist.
9. Anhängekupplung nach einer der voranstehenden Ausführungsformen, dadurch gekennzeichnet, dass die Verkleidung (120) eine die Steifigkeit der Tragstruktur (60"') erhöhende Abdeckung (122"') aufweist.
10. Anhängekupplung nach Ausführungsform 9, dadurch gekennzeichnet, dass die Abdeckung (122'") aus einem formsteifen Material hergestellt ist.
11. Anhängekupplung nach Ausführungsform 10, dadurch gekennzeichnet, dass die Abdeckung (122'") aus Metall hergestellt ist.
12. Anhängekupplung nach einer der Ausführungsformen 9 bis 11, dadurch gekennzeichnet, dass die Abdeckung (122'") stoffschlüssig mit der Strebentragstruktur (62'") verbunden ist.
13. Anhängekupplung nach einer der voranstehenden Ausführungsformen, dadurch gekennzeichnet, dass die Freiräume (92, 94, 96, 98) durch die mindestens eine Abdeckung (122, 124) überdeckt sind.
14. Anhängekupplung nach einer der voranstehenden Ausführungsformen, dadurch gekennzeichnet, dass die Verkleidung (120) mindestens zwei Abdeckungen (122, 124) umfasst, welche die Tragstruktur (60) im Bereich ihrer Seiten (102, 104) überdecken.
15. Anhängekupplung nach einer der voranstehenden Ausführungsformen, dadurch gekennzeichnet, dass mindestens ein Teil der Freiräume (92, 94, 96, 98, 112, 114, 116) durch mindestens zwei Abdeckungen (122, 124) überdeckt ist.
16. Anhängekupplung nach einer der voranstehenden Ausführungsformen, dadurch gekennzeichnet, dass die mindestens eine Abdeckung (122, 124) an der Tragstruktur (60) gehalten ist.
17. Anhängekupplung nach einer der voranstehenden Ausführungsformen, dadurch gekennzeichnet, dass die mehreren Abdeckungen (122, 124) einzeln an der Tragstruktur (60) gehalten sind.
18. Anhängekupplung nach einer der voranstehenden Ausführungsformen, dadurch gekennzeichnet, dass die Abdeckungen (122, 124) durch eine mindestens einen der Freiräume (92, 96, 116) der Tragstruktur (60) durchsetzende Verbindungseinheit (126, 128, 142) miteinander verbunden sind.
19. Anhängekupplung nach einer der voranstehenden Ausführungsformen, dadurch gekennzeichnet, dass die Tragstruktur (60) Anlagenkonturen (132, 134, 136, 138) für die mindestens eine Abdeckung (122, 124) bildet.
20. Anhängekupplung nach Ausführungsform 19, dadurch gekennzeichnet, dass die Tragstruktur (60) für die Abdeckungen (122, 124) eine zusammenhängende Anlagekontur (132, 134, 136, 138) bildet, längs welcher die mindestens eine Abdeckung (122, 124) mit Anlagebereichen (133, 135, 137, 139) abschließend anliegt.
21. Anhängekupplung nach einer der voranstehenden Ausführungsformen, dadurch gekennzeichnet, dass die Verkleidung (120) auf einer der Tragstruktur (60) abgewandten Seite eine weichelastische Auflage (326) trägt.
22. Anhängekupplung nach Ausführungsform 21, dadurch gekennzeichnet, dass die weichelastische Auflage als Stoßdämpferkörper (326) ausgebildet ist.
23. Anhängekupplung nach Ausführungsform 22, dadurch gekennzeichnet, dass der Stoßdämpferkörper (326) an einer dem Fahrzeug abgewandten Rückseite der Tragstruktur (60) angeordnet ist.
24. Anhängekupplung nach Ausführungsform 22 oder 23, dadurch gekennzeichnet, dass der Stoßdämpferkörper (326) auf einer einer Fahrbahn (34) zugewandten Seite der Tragstruktur (60) angeordnet ist.
25. Anhängekupplung nach einer der voranstehenden Ausführungsformen, dadurch gekennzeichnet, dass mindestens eine Funktionseinheit (146, 202) an der Verkleidung (120) gehalten ist.
26. Anhängekupplung nach Ausführungsform 25, dadurch gekennzeichnet, dass die mindestens eine Funktionseinheit (146, 202) mittels der Abdeckung (122, 124) relativ zu der Tragstruktur (120) fixiert ist.
27. Anhängekupplung nach einer der voranstehenden Ausführungsformen, dadurch gekennzeichnet, dass an der mindestens einen Abdeckung (122, 124) eine zu einer Sensoreinheit und/oder einer Funktionseinheit geführte elektrische Leitung gehalten ist.
28. Anhängekupplung nach einer der voranstehenden Ausführungsformen, dadurch gekennzeichnet, dass an der mindestens einen Abdeckung (122, 124) ein elektronisches Kontaktverbinderelement (158, 184, 206) gehalten ist.
29. Anhängekupplung nach einer der Ausführungsformen 25 bis 28, dadurch gekennzeichnet, dass die mindestens eine Funktionseinheit (142, 202) mittels der Abdeckung (122, 124) relativ zu der Tragstruktur (60) fixiert ist.
30. Anhängekupplung nach Ausführungsform 29, dadurch gekennzeichnet, dass mindestens eine Funktionseinheit (142, 202) ausschließlich an der mindestens einen Abdeckung (122, 124) gehalten ist.
31. Anhängekupplung nach einer der Ausführungsformen 25 bis 30, dadurch gekennzeichnet, dass die mindestens eine Funktionseinheit (142, 202) an mindestens zwei Abdeckungen (122, 124) gehalten ist.
32. Anhängekupplung nach Ausführungsform 31, dadurch gekennzeichnet, dass die Funktionseinheit (142, 202) ein Verbindungselement zwischen den zwei Abdeckungen (122, 142) darstellt.
33. Anhängekupplung nach Ausführungsform 32, dadurch gekennzeichnet, dass die Verbindungseinheit zwischen den Abdeckungen (122, 124) durch ein Gehäuse einer Funktionseinheit (142) gebildet ist.
34. Anhängekupplung nach einer der voranstehenden Ausführungsformen, dadurch gekennzeichnet, dass die mindestens eine Funktionseinheit (142, 202) in die mindestens eine Abdeckung (122, 124) integriert ist.
35. Anhängekupplung nach einer der voranstehenden Ausführungsformen, dadurch gekennzeichnet, dass die Funktionseinheit (142, 202) eine elektrische oder elektronische Funktionseinheit ist.
36. Anhängekupplung nach Ausführungsform 35, dadurch gekennzeichnet, dass die mindestens eine Funktionseinheit eine Kontakteinheit (142) für eine Verbindung zwischen einem elektrischen Fahrzeugnetz (168) und einem elektrischen Netz (140) einer am Kuppelelement (32) ankuppelbaren Einheit ist.
37. Anhängekupplung nach einer der voranstehenden Ausführungsformen, dadurch gekennzeichnet, dass die Funktionseinheit eine Betriebszustandserfassungseinheit (202) umfasst.
38. Anhängekupplung nach einer der voranstehenden Ausführungsformen, dadurch gekennzeichnet, dass die Funktionseinheit (202) eine Anzeigesteuerung umfasst.
39. Anhängekupplung nach einer der voranstehenden Ausführungsformen, dadurch gekennzeichnet, dass die Funktionseinheit eine Anzeigeeinheit (222) umfasst.
40. Anhängekupplung nach einer der voranstehenden Ausführungsformen, dadurch gekennzeichnet, dass die Funktionseinheit eine Beleuchtungseinheit (270) umfasst.
41. Anhängekupplung nach einer der voranstehenden Ausführungsformen, dadurch gekennzeichnet, dass die Funktionseinheit eine Projektionseinheit (280) umfasst.

Weitere Merkmale und Vorteile der vorliegenden Erfindung sind Gegenstand der nachfolgenden Beschreibung sowie der zeichnerischen Darstellung einiger Ausführungsbeispiele.

In der Zeichnung zeigen:
- Fig. 1: eine rückwärtige Ansicht eines Kraftfahrzeugs mit einer erfindungsgemäßen Anhängekupplung;
- Fig. 2: eine vergrößerte Darstellung einer erfindungsgemäßen Anhängekupplung mit einer Montageeinheit und einer Lagereinheit;
- Fig. 3: eine perspektivische Darstellung eines ersten Ausführungsbeispiels eines erfindungsgemäßen Kugelhalses mit einer Strebenstruktur als Tragstruktur;
- Fig. 4: eine Schnittdarstellung in Abwicklung längs Linie 4-4 in Fig. 3;
- Fig. 5: einen Vertikalschnitt längs Linie 5-5 in Fig. 4, allerdings nicht in Abwicklung;
- Fig. 6: eine perspektivische Darstellung eines zweiten Ausführungsbeispiels eines erfindungsgemäßen Kugelhalses in Explosionsdarstellung umfassend eine Strebenstruktur und eine Verkleidung;
- Fig. 7: eine Zusammenbauzeichnung des zweiten Ausführungsbeispiels;
- Fig. 8: einen Schnitt längs Linie 8-8 in Fig. 7;
- Fig. 9: eine Explosionsdarstellung eines dritten Ausführungsbeispiels eines erfindungsgemäßen Kugelhalses;
- Fig. 10: eine Zusammenbauzeichnung des dritten Ausführungsbeispiels des erfindungsgemäßen Kugelhalses;
- Fig. 11: einen Schnitt ähnlich Fig. 4 in Abwicklung durch das dritte Ausführungsbeispiel;
- Fig. 12: eine Explosionsdarstellung eines vierten Ausführungsbeispiels eines erfindungsgemäßen Kugelhalses;
- Fig. 13: einen Schnitt ähnlich Fig. 4 durch das zusammengebaute vierte Ausführungsbeispiel;
- Fig. 14: einen Schnitt längs Linie 14-14 in Fig. 13;
- Fig. 15: einen Schnitt ähnlich Fig. 14 durch ein fünftes Ausführungsbeispiel eines erfindungsgemäßen Kugelhalses;
- Fig. 16: einen Schnitt ähnlich Fig. 4 durch ein sechstes Ausführungsbeispiel eines erfindungsgemäßen Kugelhalses;
- Fig. 17: einen Schnitt ähnlich Fig. 4 durch ein siebtes Ausführungsbeispiel eines erfindungsgemäßen Kugelhalses;
- Fig. 18: einen Schnitt ähnlich Fig. 4 durch ein achtes Ausführungsbeispiel eines erfindungsgemäßen Kugelhalses;
- Fig. 19: einen Schnitt ähnlich Fig. 4 durch ein neuntes Ausführungsbeispiel eines erfindungsgemäßen Kugelhalses;
- Fig. 20: eine Explosionsdarstellung eines zehnten Ausführungsbeispiels eines erfindungsgemäßen Kugelhalses;
- Fig. 21: einen Schnitt längs Linie 21-21 durch das zusammengebaute zehnte Ausführungsbeispiel;
- Fig. 22: eine perspektivische Darstellung eines elften Ausführungsbeispiels eines erfindungsgemäßen Kugelhalses;
- Fig. 23: eine perspektivische Darstellung eines zwölften Ausführungsbeispiels eines erfindungsgemäßen Kugelhalses;
- Fig. 24: eine Explosionsdarstellung eines dreizehnten Ausführungsbeispiels eines erfindungsgemäßen Kugelhalses;
- Fig. 25: eine Zusammenbaudarstellung des dreizehnten Ausführungsbeispiels des erfindungsgemäßen Kugelhalses;
- Fig. 26: eine Explosionsdarstellung eines vierzehnten Ausführungsbeispiels eines erfindungsgemäßen Kugelhalses;
- Fig. 27: eine Zusammenbauzeichnung des vierzehnten Ausführungsbeispiels des erfindungsgemäßen Kugelhalses;
- Fig. 28: eine perspektivische Darstellung eines fünfzehnten Ausführungsbeispiels eines erfindungsgemäßen Kugelhalses;
- Fig. 29: eine perspektivische Darstellung eines sechzehnten Ausführungsbeispiels eines erfindungsgemäßen Kugelhalses;
- Fig. 30: einen Schnitt längs Linie 30-30 durch das sechzehnte Ausführungsbeispiel des erfindungsgemäßen Kugelhalses;
- Fig. 31: eine Seitenansicht eines siebzehnten Ausführungsbeispiels einer erfindungsgemäßen Anhängekupplung;
- Fig. 32: einen Schnitt längs Linie 32-32 in Fig. 31;
- Fig. 33: einen Schnitt längs Linie 33-33 in Fig. 31;
- Fig. 34: einen Schnitt längs Linie 34-34 in Fig. 31;
- Fig. 35: eine Seitenansicht des Kugelhalses gemäß dem siebzehnten Ausführungsbeispiel;
- Fig. 36: einen Schnitt durch das siebzehnte Ausführungsbeispiel des Kugelhalses ähnlich Fig. 32;
- Fig. 37: einen Schnitt durch den Kugelhals des siebzehnten Ausführungsbeispiels entsprechend Fig. 33 und
- Fig. 38: einen Schnitt durch den Kugelhals gemäß dem siebzehnten Ausführungsbeispiel entsprechend Fig. 34.

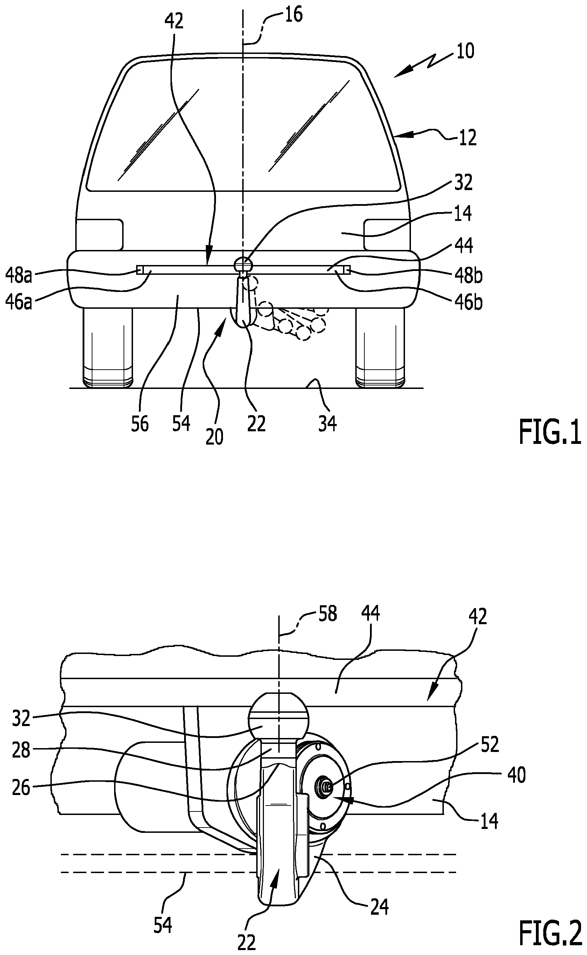

Ein in Fig. 1 dargestelltes und als Ganzes mit 10 bezeichnetes Kraftfahrzeug umfasst eine Karosserie 12, die an einem Heckbereich 14 eine Anhängekupplung 20 trägt, welche wie in Fig. 1 und 2 dargestellt, einen Kugelhals 22 aufweist, der sich von einem fahrzeugzugewandten ersten Endbereich 24 zu einem fahrzeugabgewandten zweiten Endbereich 26 trägt, wobei an dem zweiten Endbereich 26 ein Kugelansatz 28 angeordnet ist, auf welchem eine Kupplungskugel 32 sitzt, die somit über den Kugelansatz 28 mit dem zweiten Endbereich 26 des Kugelhalses 22 verbunden ist.

Der erste Endbereich 24 des Kugelhalses 22 ist über eine als Ganzes mit 40 bezeichnete Lagereinheit mit einer fahrzeugseitigen Montageeinheit 42 verbunden, über welche eine Verbindung mit dem Heckbereich 14 der Karosserie 12 erfolgt.

Beispielsweise umfasst die Montageeinheit 42 einen Querträger 44, der sich quer zu einer zu einer horizontalen Fahrbahn 34 vertikalen Längsmittelebene 16 der Karosserie 12 erstreckt und im Bereich seiner Trägerenden 46a, 46b mit dem Heckbereich 14 verbunden ist, beispielsweise über beiderseits der Längsmittelebene 16 und parallel zu dieser verlaufende Längsträger 48a, 48b die einerseits mit den Trägerenden 46a, 46b und andererseits mit der Karosserie 12, insbesondere dem Heckbereich 14 derselben, verbunden sind.

Beispielsweise ist die Lagereinheit 40 im einfachsten Fall so ausgebildet, dass sie eine starre Verbindung zwischen dem ersten Endbereich 24 des Kugelhalses 22 und der Montageeinheit 42 herstellt.

Im in Fig. 1 und 2 dargestellten Ausführungsbeispiel ermöglicht die Lagereinheit 40 ein Schwenken des Kugelhalses 22 um eine fahrzeugfest angeordnete, jedoch relativ zu der vertikalen Längsmittelebene 16 schräg, insbesondere in einem spitzen Winkel, verlaufende Schwenkachse 52, so dass wie in Fig. 1 dargestellt, der Kugelhals 22 unter einer Unterkante 54 einer heckseitigen Stoßfängereinheit 56 hindurch bewegbar ist und in einem Zwischenraum zwischen der Stoßfängereinheit 56 und dem Heckbereich 14 der Karosserie 12 in einer Ruhestellung positionierbar ist, während in der in Fig. 1 dargestellten Arbeitsstellung sich der Kugelhals 22 im Wesentlichen in parallel zur Längsmittelebene 16 erstreckt, zumindest jedoch so verläuft, dass in der Arbeitsstellung eine vertikale Mittelachse 58 der Kupplungskugel 32 gleichzeitig eine Mittelachse des Kugelansatzes 28 darstellt und diese Mittelachse 58 in der Längsmittelebene der Karosserie 12 liegt.

Derartige Lagereinheiten 40 mitsamt den dazugehörigen Verriegelungsvorrichtungen sind beispielsweise in den europäischen Patentanmeldungen EP 1 142 732 A, EP 1 741 572 A, EP 1 886 847 A, EP 2 141 034 A, EP 2 261 066 A, EP 2 567 837 A im Detail beschrieben, und auf diese Patentanmeldungen wird vollinhaltlich Bezug genommen.

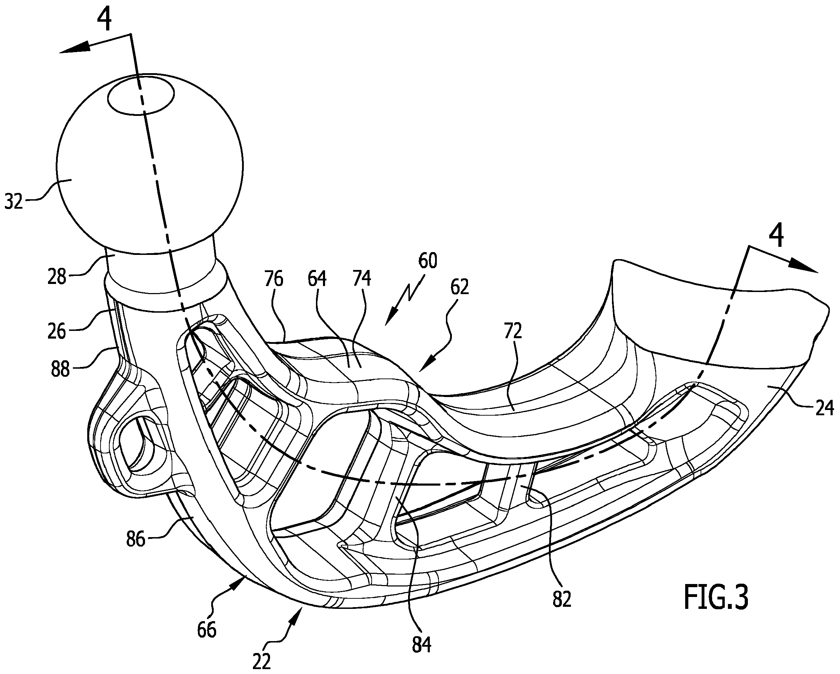

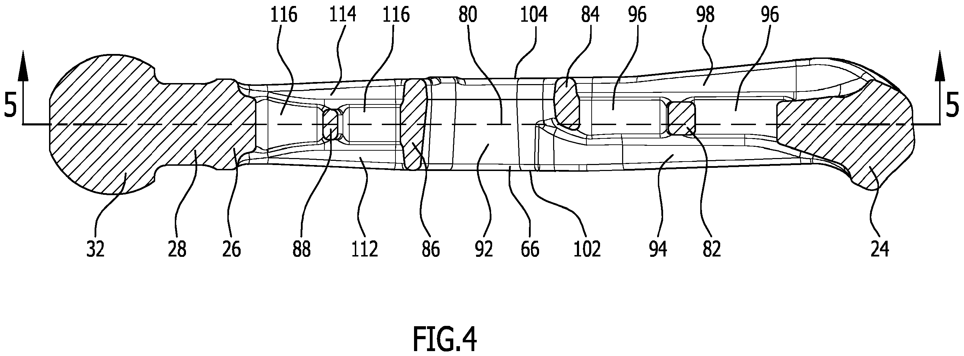

Wie in Fig. 3 und Fig. 4 dargestellt, umfasst der Kugelhals 22 eine vom ersten Endbereich 24 zum zweiten Endbereich 26 verlaufende Tragstruktur 60, die den ersten Endbereich 24 mit dem zweiten Endbereich 26 im Wesentlichen biege- und torsionssteif miteinander verbindet, wobei unter einer im Wesentlichen biege- und torsionssteifen Verbindung eine Verbindung zu verstehen ist, die bei in der Arbeitsstellung stehendem Kugelhals 22 bei den in der nachfolgenden Tabelle dargestellten Belastungen die folgenden Steifigkeitswerte aufweist.

Die Steifigkeit der Tragstruktur lässt sich beispielsweise bestimmen bei einer Belastung von 100 KN in der jeweiligen Raumrichtung sich die Kupplungskugel 32 relativ zum ersten Endbereich um maximal 5 mm bewegt.

Bei dem in Fig. 3 und 4 dargestellten Ausführungsbeispiel des Kugelhalses 22 ist die Tragstruktur 60 als Strebenstruktur 62 ausgebildet, welche bezogen auf die Arbeitsstellung des Kugelhalses 22 eine erste Längsstrebe 64 und eine zweite Längsstrebe 66 aufweist, wobei die erste Längsstrebe in der Arbeitsstellung auf einer der Fahrbahn 34 abgewandten Seite und die zweite Längsstrebe der Fahrbahn 34 zugewandt angeordnet ist.

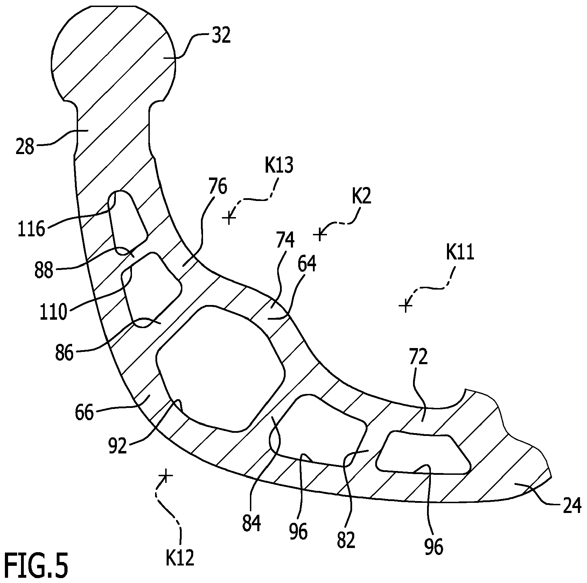

Dabei verläuft die erste Längsstrebe 64 vom insbesondere massiv ausgebildeten ersten Endbereich 24 zum insbesondere massiv ausgebildeten zweiten Endbereich 26 und die zweite Längsstrebe 66 ebenfalls vom ersten Endbereich 24 zum zweiten Endbereich 26, allerdings im Abstand von der ersten Längsstrebe 64 wobei die zweite Längsstrebe 66 in der Arbeitsstellung des Kugelhalses 22 beispielsweise eine Krümmung aufweist, bei welcher ein Krümmungsmittelpunkt K2 oder gegebenenfalls mehrere Krümmungsmittelpunkte auf einer der Fahrbahn 34 abgewandten Seite liegen (Fig. 5).

Auch die erste Längsstrebe 64 verläuft bei diesem, in Fig. 3 dargestellten Ausführungsbeispiel mit einem ersten Teilbereich 72 ausgehend vom ersten Endbereich 24 mit insgesamt drei aufeinanderfolgenden Teilbereichen 72, 74, 76 bis zum zweiten Endbereich 26, wobei die Teilbereiche 72 und 76 Krümmungen aufweisen, deren Krümmungsmittelpunkte K11 und K13 auf einer der Fahrbahn 34 abgewandten Seite derselben liegen, während der Teilbereich 74 eine Krümmung aufweist, dessen Krümmungsmittelpunkt K12 oder Krümmungsmittelpunkte auf einer der Fahrbahn 34 zugewandten Seite des Teilbereichs 74 liegen (Fig. 5).

Ferner verlaufen, wie insbesondere in Fig. 4 im Zusammenhang mit der zweiten Längsstrebe 66 dargestellt, beide Längsstreben 64, 66 in einer durch die Gesamtform des Kugelhalses 22 definierte Mittelfläche 80 und erstrecken sich quer zur Mittelfläche 80 in allen Bereichen beiderseits über diese hinaus, so dass beide Längsstreben 64, 66 quer zur Mittelfläche 80 eine Breitenausdehnung von mindestens 15 mm, noch besser mindestens 20 mm aufweisen.

Ferner weisen die Längsstreben 64, 66 in der Mittelfläche 80 eine quer zu ihrer Verlaufsrichtung verlaufende Höhenausdehnung von mindestens 5 mm auf.

Bei dem in Fig. 1 bis 5 dargestellten ersten Ausführungsbeispiel verlaufen die Längsstreben 64 und 66 im Bereich zwischen dem ersten Endbereich 24 und dem zweiten Endbereich 26 berührungsfrei zueinander, sind allerdings durch in Fig. 3 dargestellte Verbindungsstreben 82, 84, 86, 88 miteinander verbunden, wobei die Verbindungsstreben 82, 84, 86, 88, wie in Fig. 4 dargestellt, sich beispielsweise ebenfalls quer zur Mittelfläche 80 ausdehnen und jeweils die Längsstreben 64 und 66 miteinander starr verbinden.

Die Verbindungsstreben 82, 84, 86, 88 sind vorzugsweise alle so angeordnet, dass die Mittelfläche 80 diese schneidet und verlaufen außerdem in Richtung vom ersten Endbereich 24 zum zweiten Endbereich 26 im Abstand voneinander.

Durch die Strebenstruktur 62 der Tragstruktur 60 entstehen somit mehrere, insbesondere zwischen den Längsstreben 64 und 66, angeordnete Freiräume. So ist beispielsweise ein erster Freiraum 92 so ausgebildet, dass er einen die gesamte Strebenstruktur 62, ausgehend von einer seitlichen Außenkontur 102 des Kugelhalses 22 zur gegenüberliegenden seitlichen Außenkontur 104 durchsetzt und somit einen Durchlass in der Strebenstruktur 62 darstellt.

Ein weiterer Freiraum 94 ist beispielsweise als relativ zu der seitlichen Außenkontur 102 des Kugelhalses 22 zurückgesetzte Tasche ausgebildet und geht in zwei jeweils als Durchlässe ausgebildete Freiräume 96 über, die wiederum in einen als relativ zu der seitlichen Außenkontur 104 des Kugelhalses zurückgesetzte Tasche ausgebildeten Freiraum 98 münden.

Vorzugsweise liegt der als Durchlass ausgebildete Freiraum 92 zwischen den Verbindungsstreben 84 und 86 und die als Durchlässe ausgebildeten Freiräume 96 liegen zwischen dem ersten Endbereich 24 und der Verbindungsstrebe 82 sowie der Verbindungsstrebe 82 und der Verbindungsstrebe 84 und außerdem liegen die als Taschen ausgebildeten Freiräume 94 und 98 zwischen dem ersten Endbereich 24 und der Verbindungsstrebe 84.

Des Weiteren sind auch zwischen der Verbindungsstrebe 86 und dem zweiten Endbereich 26 als einander gegenüberliegende Taschen ausgebildete Freiräume 112 und 114 vorgesehen, wobei der Freiraum 112 relativ zu der seitlichen Außenkontur 102 des Kugelhalses 22 und der Freiraum 114 relativ zu der seitlichen Außenkontur 104 zurückgesetzt ist und zwischen diesen Freiräumen 112 und 114 liegen wiederum als Durchlässe ausgebildete Freiräume 116, wobei der eine als Durchlass ausgebildete Freiraum 116 zwischen der Verbindungsstrebe 86 und der Verbindungsstrebe 88 und der andere als Durchlass ausgebildete Freiraum 116 zwischen der Verbindungsstrebe 88 und dem zweiten Endbereich 26 liegt.

Die erfindungsgemäße Strebenstruktur 62 mit den Freiräumen 92 bis 98 sowie 112 bis 116 hat den Vorteil, dass sich damit die Masse des Kugelhalses 22 bei gleicher Steifigkeit signifikant gegenüber massiven Kugelhälsen, selbst wenn diese einen Durchbruch aufweisen, reduzieren lässt.

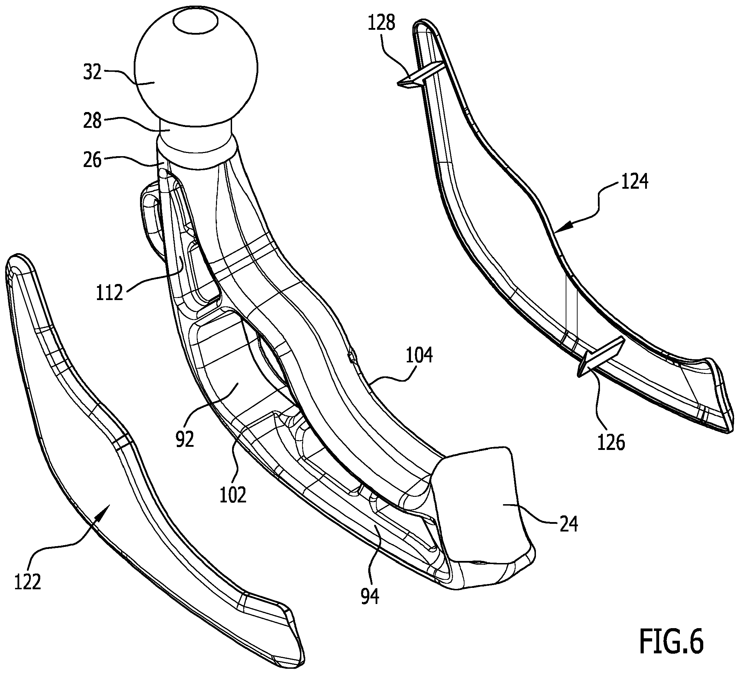

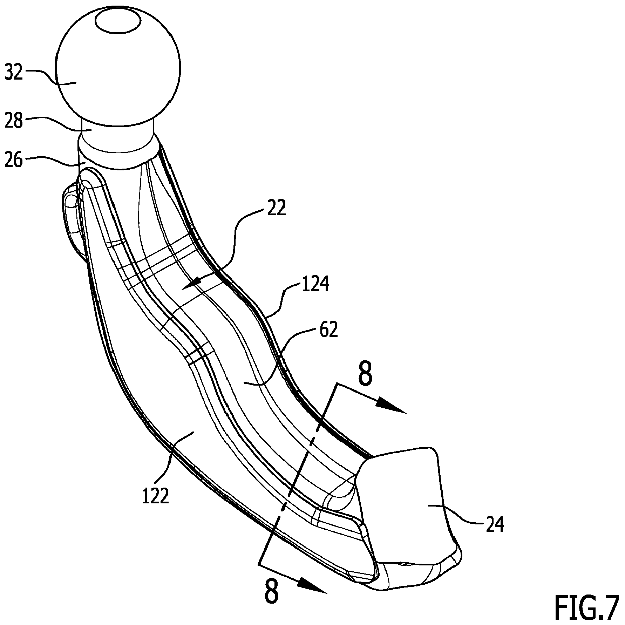

Um beim Einsatz eines derartigen Kugelhalses 22 die Freiräume 92 bis 98 sowie 112 bis 116 nicht sichtbar werden zu lassen, ist bei einem zweiten Ausführungsbeispiel eine für die Strebenstruktur 62 nicht tragende Verkleidung 120 vorgesehen, die beispielsweise, wie in Fig. 6 dargestellt, struktursteife Abdeckungen 122, 124 umfasst, welche den Kugelhals im Bereich seiner seitlichen Außenkonturen 102 und 104 verschließen, wobei die Abdeckungen 122, 124 beispielsweise sämtliche der über die Außenkonturen 102 und 104 sichtbaren und zugänglichen Freiräume 92, 94, 96, 98, 112, 114, 116 überdecken und, wie in Fig. 7 dargestellt, dem in Form der Strebenstruktur 62 hergestellten Kugelhals durch Überdecken der Freiräume 92 bis 98 sowie 112 bis 116 ein gefälliges äußeres Erscheinungsbild verleihen, so dass die Strebenstruktur 62 als solche nicht erkennbar ist und der Kugelhals 22 mit der Strebenstruktur 62 ein kompaktes Aussehen besitzt.

Die Abdeckungen 122, 124 lassen sich vorzugsweise als Kunststoffformteile, insbesondere als nicht tragende Kunststoffformteile, in einfacher Weise mit dem gewünschten entsprechenden optischen Erscheinungsbild herstellen, so dass dadurch beispielsweise die Möglichkeit besteht, die Strebenstruktur 62 insbesondere im Bereich der Freiräume 92 bis 98 sowie 112 bis 116 im durch das Herstellverfahren, beispielsweise das Umformen, entstandenen Rohzustand und unbearbeitet zu belassen, da diese durch die Abdeckungen 122 und 124 nicht sichtbar sind.

Darüber hinaus lassen sich vorzugsweise die Abdeckungen 122 und 124, wie in Fig. 6 dargestellt, durch jeweils an den Abdeckungen 122 und 124 angeordnete Rastelemente 126 und 128 miteinander verbinden, wobei die Rastelemente 126 und 128 jeder der Abdeckungen 122 und 124 jeweils zusammenwirken und einander hintergreifen, so dass die Abdeckungen 122 und 124 die Strebenstruktur 62 zwischen sich einschließen.

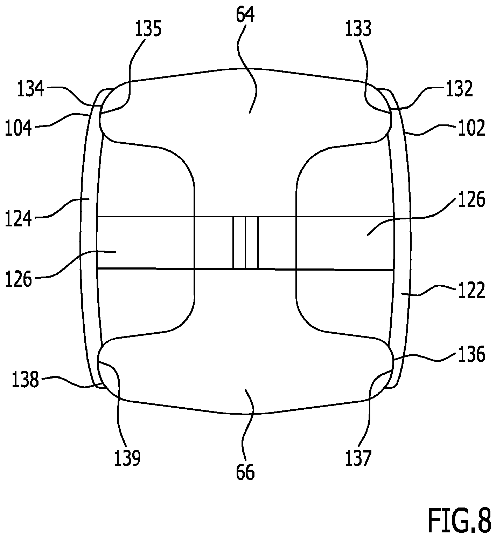

Ferner sind die Abdeckungen 122 und 124, wie in Fig. 8 dargestellt, so ausgebildet, dass sie die Außenkonturen 102 und 104 bildende Randbereichen 132 und 134 der ersten Längsstrebe 64 sowie Randbereiche 136 und 138 der zweiten Längsstrebe 66 übergreifen, wobei diese Randbereiche 132, 134, 136, 138 vorzugsweise auf jeder Seite geschlossen umlaufende Anlage Konturen für die Abdeckungen 122, 124 darstellen, an denen diese mit an diese angepassten Anlagestrukturen 133, 135, 137, 138 anliegt und insbesondere abschließend sowie formschlüssig an diesen anliegen, so dass dadurch eine eindeutige Positionierung der Abdeckungen 122, 124 relativ zu der Strebenstruktur 62 erfolgt.

Im Übrigen sind bei dem zweiten Ausführungsbeispiel diejenigen Elemente, die mit denen eines der voranstehenden Ausführungsbeispiele identisch sind, mit denselben Bezugszeichen versehen, so dass diesbezüglich auf die Ausführungen zu den voranstehenden Ausführungsbeispielen Bezug genommen werden kann.

Die Tatsache, dass der Kugelhals 22 eine Tragstruktur 60 in Form der Strebenstruktur 62 aufweist und zusätzlich die Freiräume 92, 94, 96, 98, 112, 114, 116 der Tragstruktur 60 durch Abdeckungen 122, 124 abgedeckt sind, lässt sich bei einem dritten Ausführungsbeispiel weiter zum Einbau von zusätzlichen Einheiten ausnutzen.

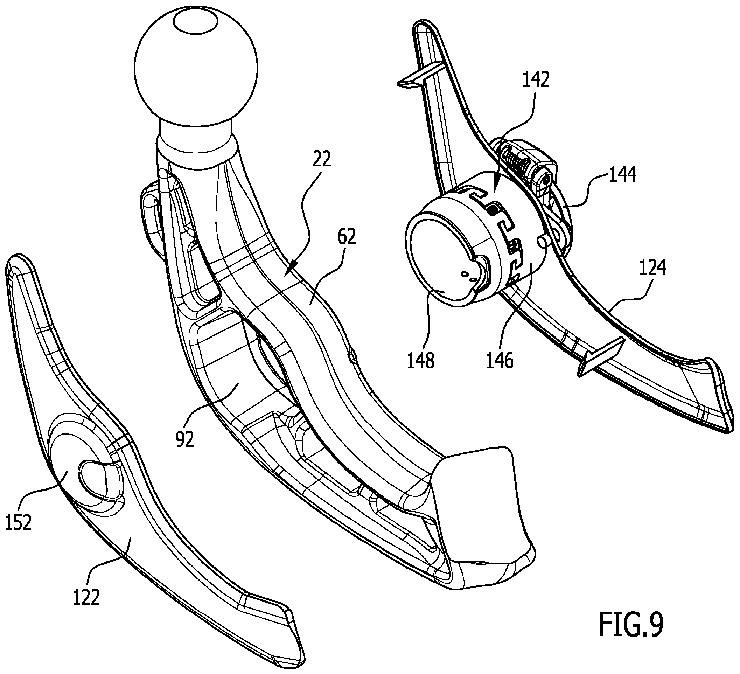

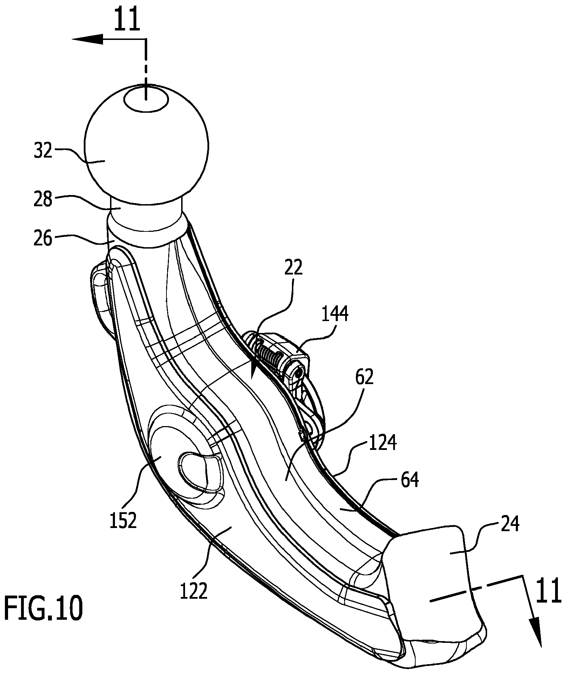

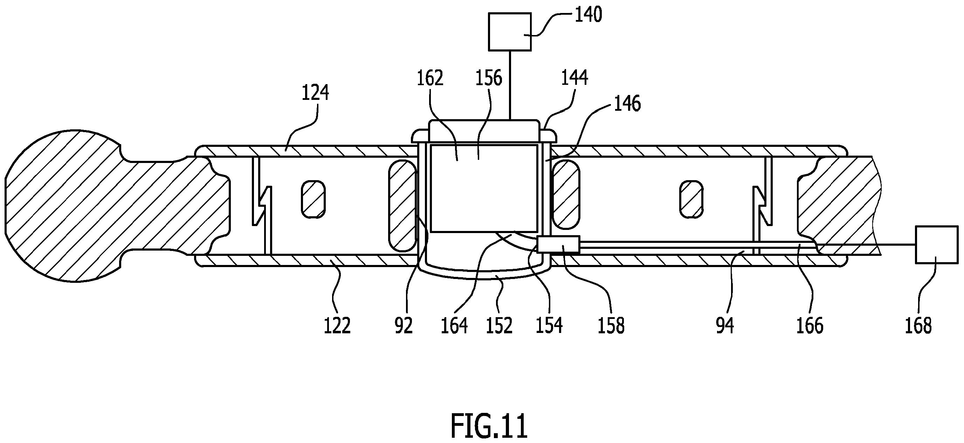

So ist, wie in Fig. 9 und 10 dargestellt, bei dem dritten Ausführungsbeispiel beispielsweise eine als Ganzes mit 142 bezeichnete elektrische Kontakteinheit zur Herstellung einer elektrischen Verbindung mit einem elektrischen Anhängernetz 140 beispielsweise an der Abdeckung 124 gehalten, wobei ein mit einem Deckel 144 verschließbarer Zugangsbereich der Kontakteinheit 142 im Bereich der Abdeckung 124 liegt und sich ein Kontaktgehäuse 146 ausgehend von der Abdeckung 124 in Richtung der Strebenstruktur 62 erstreckt und vorzugsweise so angeordnet ist, dass dieses sich durch den als Durchlass ausgebildeten Freiraum 92 erstreckt, wobei eine dem Deckel 144 abgewandte Rückseitenöffnung 148 des Kontaktgehäuses 146 durch eine in die Abdeckung 122 eingeformte Deckeleinheit 152 verschließbar ist, und wobei die Deckeleinheit 152 mit dem Kontaktgehäuse 146 durch Verbindungselemente 154, beispielsweise durch Fügen- oder Rastelemente, verbindbar ist, um einen Innenraum 156 des Kontaktgehäuses 146 im Bereich der Rückseitenöffnung 148 zuverlässig zu verschließen, wie in Fig. 11 dargestellt. Vorzugsweise liegt bei diesem Ausführungsbeispiel in dem Freiraum 94 eine Steckverbindung 158, welche eine elektrische Verbindung zwischen einer von einem Kontakteinsatz 162 im Innenraum 156 des Kontaktgehäuses 146 kommenden Leitung 164 und einer von einem elektrischen Fahrzeugnetz 168 kommenden Leitung 166 ermöglicht, wie in Fig. 11 dargestellt.

Insbesondere sind die Steckverbindungen 158 und die Leitung 166, insoweit als sie in dem Freiraum 94 verläuft an der Abdeckung 122 gehalten.

Im Übrigen sind bei dem dritten Ausführungsbeispiel diejenigen Elemente, die mit denen eines der voranstehenden Ausführungsbeispiele identisch sind, mit denselben Bezugszeichen versehen, so dass diesbezüglich auf die Ausführungen zu den voranstehenden Ausführungsbeispielen Bezug genommen werden kann.

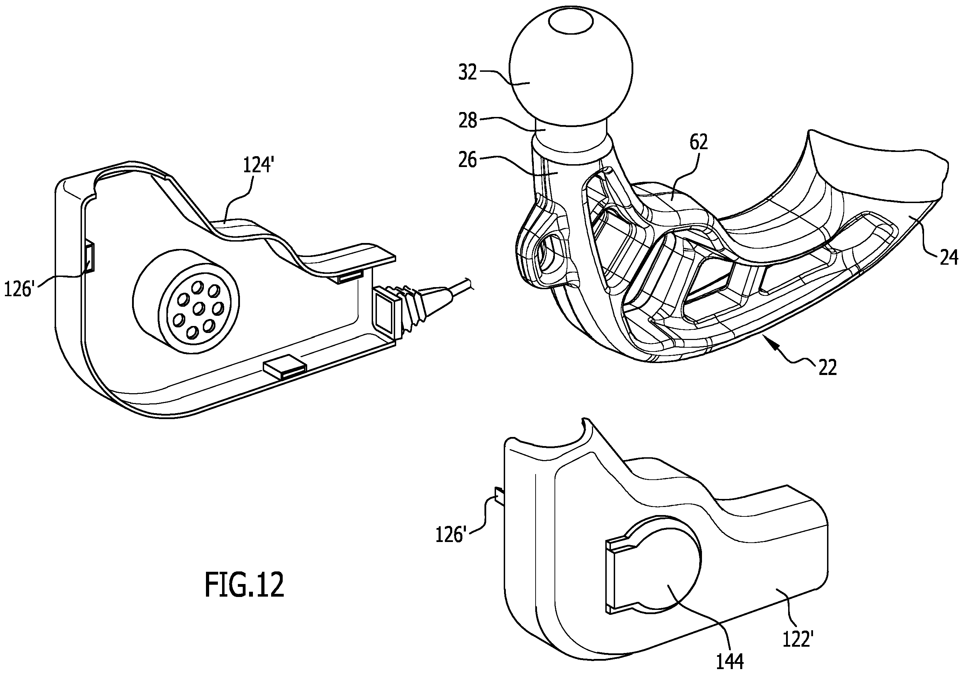

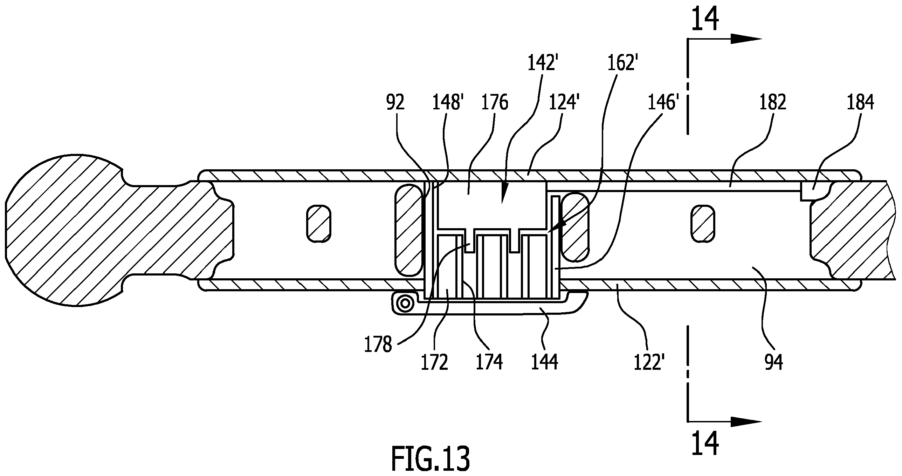

Bei einem vierten Ausführungsbeispiel, dargestellt in den Fig. 12, 13 und 14 sind die Abdeckungen 122' und 124' nicht nur so ausgebildet, dass sie die seitlichen Außenkonturen 102 und 104 der Strebenstruktur 62 überdecken und somit die Freiräume 92, 94, 96, 98, 112, 114, 116 verschließen, sondern so ausgebildet, dass sie auch die Längsstreben 64 und 66 umschließen, so dass die Strebenstruktur 62 als Ganzes durch die Abdeckungen 122' und 124' eingekapselt ist.

Vorzugsweise erfolgt dabei eine Verbindung der Abdeckungen 122' und 124' durch ineinandergreifende Rastelemente 126', die beispielsweise an den Längsstreben 64 und 66 jeweils auf einer fahrbahnabgewandten und auf einer fahrbahnzugewandten Seite anliegen.

Ferner ist bei diesem Ausführungsbeispiel vorzugsweise die Kontakteinheit 142' so aufgebaut, dass der Deckel 144 an der Abdeckung 122' gehalten ist und auch das Kontaktgehäuse 146' sich ausgehend von der Abdeckung 122' durch den Freiraum 92 der Strebenstruktur 62 in Richtung der Abdeckung 124' erstreckt, wobei der Kontakteinsatz 162' zweigeteilt ist, nämlich in einen Kontakthülsenträger 172 mit in diesem angeordneten Kontakthülsen 174, wobei die Kontakthülsen 174 zur Aufnahme externer Steckkontakte vorgesehen sind. Dabei ist der Kontakthülsenträger 172 fest in dem Kontaktgehäuse 146' fixiert und somit auch fest mit der Abdeckung 122' verbunden.

Zur Kontaktierung der Kontakthülsen 174 in dem Kontakthülsenträger 172 ist ein Kontaktiersockel 176 vorgesehen, welcher fest mit der Abdeckung 124' verbunden ist, von der Rückseitenöffnung 148' des Kontaktgehäuses 146' in dieses eingreift und seinerseits mit Kontaktstiften 178 die Kontakthülsen 174 im Kontakthülsenträger 172 kontaktiert.

Diese Lösung eröffnet die Möglichkeit, die Kontaktstifte 178 mit einer fest an der Abdeckung 124 angeordneten und im Bereich des Freiraums 98 verlaufenden Zuleitung 182 zu verbinden, welche an der Abdeckung 124' gehalten ist und beispielsweise zu dem ebenfalls im Bereich des Freiraums 98 angeordneten Kontaktverbinderelement 184 führt, das beispielsweise ebenfalls fest mit der Abdeckung 124' verbunden ist, so dass dieses Kontaktverbinderelement 184 durch eine Steckverbindung mit einer vom elektrischen Fahrzeugnetz 168 kommenden Zuleitung elektrisch verbindbar ist.

Somit lassen sich der Kontaktiersockel 176, die Zuleitung 182 und auch das Steckverbinderelement 184 mit der Abdeckung 124' verbinden, vorzugsweise bei der Herstellung derselben fixieren oder integrieren, so dass ein Zusammensetzen der Abdeckungen 122' und 124' dazu führt, dass einerseits das Kontaktgehäuse 146' durch den in dieses eingreifenden Kontaktiersockel 176 im Bereich seiner Rückseitenöffnung 148' verschlossen wird und andererseits eine Kontaktierung der Kontakthülsen 174 im Kontakthülsenträger 172 sowie deren Verbindung mit dem Kontaktverbinderelement 184 für den Anschluss einer externen Steckverbindung erfolgt.

Damit führt die Montage der Abdeckungen 122' und 124' an der Strebenstruktur 62 nicht nur zur Montage derselben sondern auch gleichzeitig zu einer Komplettmontage der Kontakteinheit 142'.

Im Übrigen sind bei dem vierten Ausführungsbeispiel diejenigen Elemente, die mit denen eines der voranstehenden Ausführungsbeispiele identisch sind, mit denselben Bezugszeichen versehen, so dass diesbezüglich auf die Ausführungen zu den voranstehenden Ausführungsbeispielen Bezug genommen werden kann.

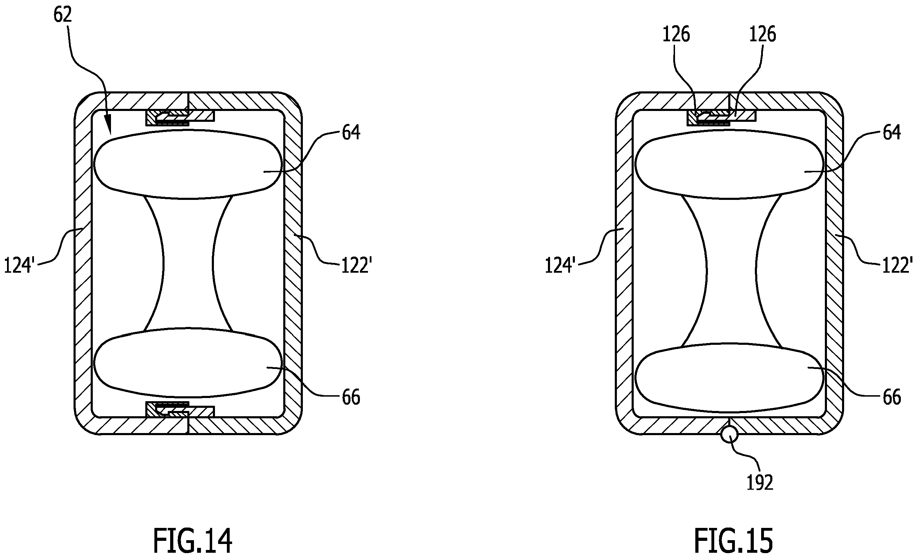

Alternativ zum Vorsehen zweier getrennter Abdeckungen 122' und 124', die sich durch die Rastelemente 126 verbinden lassen, sieht ein fünftes Ausführungsbeispiel, dargestellt in Fig. 15 vor, dass die zwei Abdeckungen 122' und 124' mit einem Scharnierelement 192, beispielsweise mit einem Filmscharnier, einseitig miteinander verbunden sind, so dass lediglich auf einer der Scharniereinheit 192 gegenüberliegenden Seite Rastelemente 126 zum Verbinden der beiden Abdeckungen 122' und 124' vorgesehen sind.

Im Übrigen sind bei dem fünften Ausführungsbeispiel diejenigen Elemente, die mit denen eines der voranstehenden Ausführungsbeispiele identisch sind, mit denselben Bezugszeichen versehen, so dass diesbezüglich auf die Ausführungen zu den voranstehenden Ausführungsbeispielen Bezug genommen werden kann.

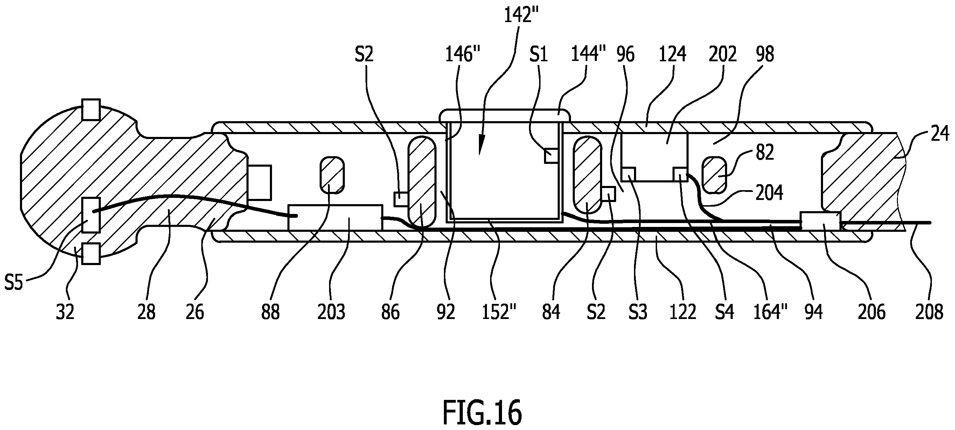

Bei einem sechsten Ausführungsbeispiel, dargestellt in Fig. 16 sind diejenigen Elemente, die mit denen der voranstehenden Ausführungsbeispiele identisch sind, mit denselben Bezugszeichen versehen, so dass hinsichtlich der Beschreibung derselben vollinhaltlich auf diese Bezug genommen werden kann.

Im Gegensatz zu den voranstehenden Ausführungsbeispielen ist die Kontakteinheit 142" mit einem Kontaktgehäuse 146" versehen, welches auf einer dem Deckel 144" gegenüberliegenden Seite topfähnlich ausgebildet und somit bereits durch eine an das Kontaktgehäuse 146 angeformte Deckeleinheit 152" unmittelbar verschlossen ist, so dass die Abdeckung 122 als durchgehende Abdeckung ausgebildet sein kann und keine Anpassung der Konzeption der Abdeckung 122 an die Kontakteinheit 142 erforderlich ist.

Ferner ist beispielsweise an der Abdeckung 124 noch eine Funktionseinheit 202 vorgesehen, die sich in den Freiraum 98 und den Freiraum 96 hineinerstreckt.

Die Funktionseinheit 202 kann unterschiedlichste Funktionen erfüllen.

Beispielsweise ist es vorgesehen, dass die Funktionseinheit 202 als Betriebszustandserfassungseinheit ausgebildet ist und Sensoreinheiten und/oder Auswerteschaltungen für die in der Funktionseinheit 202 angeordnete Sensoreinheiten oder externe Sensoreinheiten, beispielsweise an der Strebenstruktur 62 und/oder in der Kupplungskugel 32 und/oder in der Kontakteinheit 142" angeordnete Sensoreinheiten, aufweist.

Derartige Sensoreinheiten umfassen beispielsweise Positionssensoren S1 zum Erfassen eines in die Kontakteinheit 142" eingesteckten Steckverbinders zur Versorgung eines elektrischen Netzes einer vom Kugelhals 22 gehaltenen Einheit und/oder Schwingungssensoren S2 zum Erfassen von mechanischen Schwingungen in der Strebenstruktur, wobei einer oder mehrere Schwingungssensoren S2 an einer der Verbindungsstreben 84, 86 angeordnet sind und/oder Beschleunigungssensoren und/oder Lagesensoren S4, die beispielsweise in der Funktionseinheit 202 selbst angeordnet sind, und/oder in der Kupplungskugel 32 angeordnete Drehlagesensoren S5 zur Erfassung eines Knickwinkels zwischen einen an der Kupplungskugel 32 mit einer Zugkugelkupplung angreifenden Anhänger, wobei dem Drehlagensensor S5 beispielsweise noch eine eigene zusätzliche Auswerteschaltung 203 zugeordnet ist etc.

Sowohl die von der Kontakteinheit 142" wegführende elektrische Leitung 164" als auch eine von der Funktionseinheit 202 wegführende elektrische Leitung 204 lassen sich unter Ausnützung der vorhandenen Freiräume, beispielsweise der Freiräume 96 und 94, zwischen den Abdeckungen 122 und 124 verlegen und gegebenenfalls unter Zwischenschaltung einer Steckverbindung 206 mit einer zum Kraftfahrzeug geführten Leitung 208 verbinden.

Im Übrigen sind bei dem sechsten Ausführungsbeispiel diejenigen Elemente, die mit denen eines der voranstehenden Ausführungsbeispiele identisch sind, mit denselben Bezugszeichen versehen, so dass diesbezüglich auf die Ausführungen zu den voranstehenden Ausführungsbeispielen Bezug genommen werden kann.

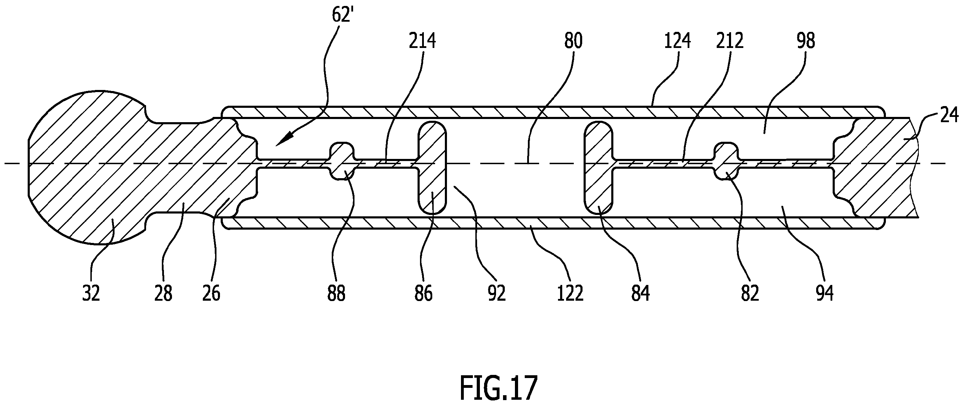

Bei einem siebten Ausführungsbeispiel, dargestellt in Fig. 17 ist die Strebenstruktur 72' insoweit gegenüber der Strebenstruktur 62 modifiziert, als die Verbindungsstreben 82, 84, 86, 88 noch zusätzlich ergänzt sind durch zwischen den Längsstreben 64, 66 verlaufende und diese verbindende Verbindungswände 212, 214, die näherungsweise parallel zur Mittelfläche 80 verlaufen, wobei die Verbindungswände 212, 214 dabei mit der Mittelfläche 80 einen Winkel von maximal 30°, noch besser maximal 20° und vorzugsweise maximal 10° einschließen.

Die Verbindungswände 212, 214 könnten selbständig unabhängig von den Verbindungsstreben 82, 84, 86, 88 angeordnete Verbindungselemente sein.

Besonders vorteilhaft ist es jedoch, wenn die Verbindungswände 212, 214 mit den Verbindungsstreben 82, 84, 86, 88 verbunden sind, insbesondere in diese übergehen und somit zusammen mit den Verbindungsstreben 82, 84, 86, 88 in vorteilhafter Weise die Steifigkeit der Strebenstruktur 62 verbessern.

Eine besonders vorteilhafte Lösung sieht dabei vor, dass die Verbindungswände 212, 214 näherungsweise in der Mittelfläche 80 liegend verlaufen und die Verbindungswand 212 einstückig mit dem ersten Endbereich 24, den Streben 82 und 84 den ersten und zweiten Längsstreben 64, 66 sowie die Verbindungswand 214 mit dem zweiten Endbereich 26 sowie den Verbindungsstreben 88 und 86 einstückig verbunden sind und somit die gesamte Strebenstruktur 62' vorzugsweise ein einziges einstückiges Teil darstellt.

Bei diesem Fall ist somit nur noch der Freiraum 92 als die Strebenstruktur 62' insgesamt durchsetzender Durchlass ausgebildet, während die Verbindungswände 212 und 214 die als Durchlässe ausgebildeten Freiräume 96 und 116 verschließen, so dass lediglich beiderseits der Verbindungswände 212 und 214 die als Taschen ausgebildeten Freiräume 94, 98 vorhanden sind.

Auch bei dem siebten Ausführungsbeispiel besteht die einfachste Möglichkeit, wie in Fig. 17 dargestellt, darin, die Freiräume durch Abdeckungen 122, 124 zu verschließen.

Im Übrigen sind bei dem siebten Ausführungsbeispiel diejenigen Elemente, die mit denen eines der voranstehenden Ausführungsbeispiele identisch sind, mit denselben Bezugszeichen versehen, so dass diesbezüglich auf die Ausführungen zu den voranstehenden Ausführungsbeispielen Bezug genommen werden kann.

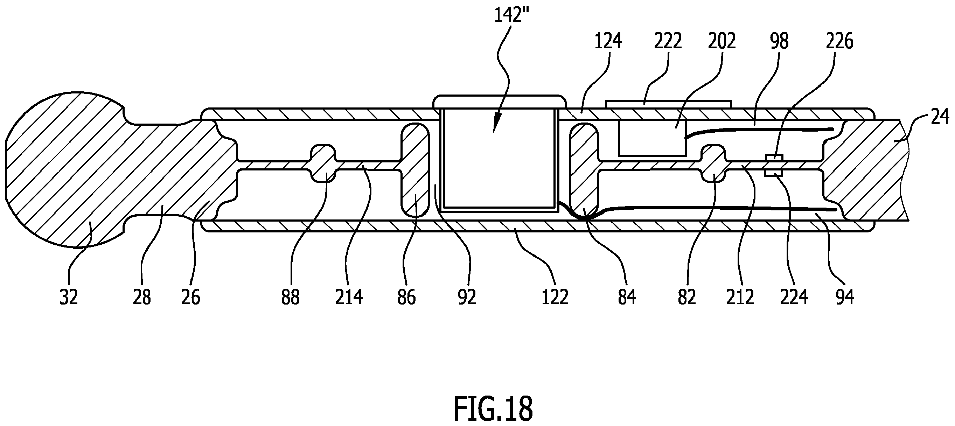

Ferner besteht, wie in Fig. 18 dargestellt, bei einem achten Ausführungsbeispiel die Möglichkeit, den Freiraum 92 durch Einsetzen der Kontakteinheit 142" zu nutzen und beispielsweise in den Freiraum 98 die Funktionseinheit 202 einzusetzen, die sich allerdings lediglich im Bereich des Freiraums 98 erstreckt.

Bei diesem Ausführungsbeispiel ist die als Betriebszustandserfassungseinheit ausgebildete Funktionseinheit 202 beispielsweise mit einer ebenfalls eine Funktionseinheit darstellenden Anzeigeeinheit 222 verbunden, die vorzugsweise an der Abdeckung 124 angeordnet ist, an welcher auch die Funktionseinheit 202 angeordnet ist, so dass in diesem Fall die Abdeckung 124 zusätzlich zur Funktionseinheit 202 auch die Anzeigeeinheit 222 trägt, die die Möglichkeit eröffnet, Betriebszustände der Anhängekupplung oder des Anhängers oder Belastungszustände der Anhängekupplung, insbesondere Belastungszustände des Kugelhalses 22, die beispielsweise über an der Strebenstruktur 62', insbesondere den Verbindungswänden 212, 214, angeordnete Dehnungssensoren S6, S6 gemessen werden, anzuzeigen.

Im Übrigen sind bei dem achten Ausführungsbeispiel diejenigen Elemente, die mit denen eines der voranstehenden Ausführungsbeispiele identisch sind, mit denselben Bezugszeichen versehen, so dass diesbezüglich auf die Ausführungen zu den voranstehenden Ausführungsbeispielen Bezug genommen werden kann.

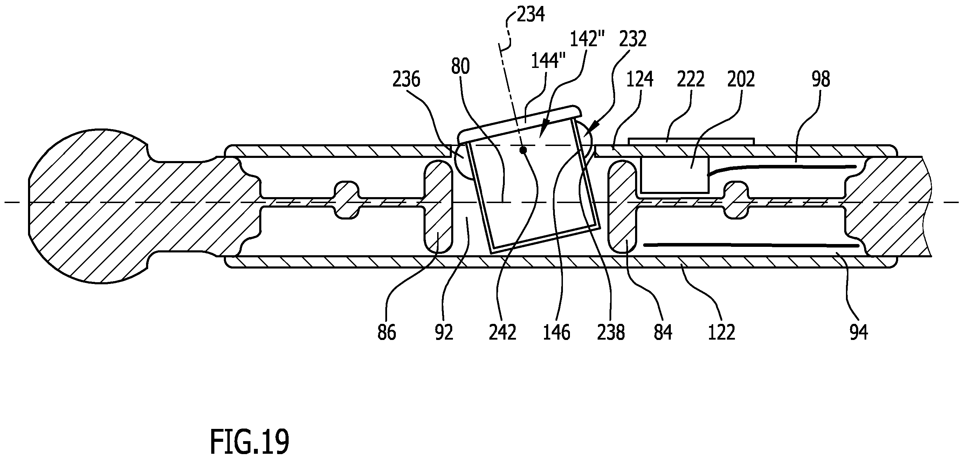

Bei einem neunten Ausführungsbeispiel, dargestellt in Fig. 19 ist die Kontakteinheit 142" mittels einer Schwenkeinheit 232 an der Abdeckung 124 gelagert, so dass sich die Kontakteinheit 142' mit ihrer Mittelachse 234 so verschwenken lässt, dass die Mittelachse 234 in einem von 90° abweichenden Winkel zur Mittelfläche 80 verläuft, um die Zugänglichkeit zu der Kontakteinheit 142" für einen Benutzer in der Arbeitsstellung zu verbessern.

Beispielsweise umfasst die Schwenkeinheit 232 einen mit seiner Außenkontur ballig ausgebildeten Aufnahmering 236, welcher das Kontaktgehäuse 146 umschließt und seinerseits mit seiner balligen Außenfläche in einer an der Abdeckung 124 ausgebildeten Schwenkaufnahme 238 sitzt, so dass der Aufnahmering 236 um einen Punkt 242 schwenkbar ist, welcher ein Kugelmittelpunkt einer die ballige Außenkontur des Aufnahmerings 236 definierenden Kugelfläche ist, so dass dadurch begrenzt durch den Freiraum 92 und die beiderseits des Freiraums 92 angeordneten Verbindungsstreben 84 und 86 die Kontakteinheit 142" schwenkbar ist, um die Zugänglichkeit zu der Kontakteinheit 142" zu verbessern.

Im Übrigen sind bei dem neunten Ausführungsbeispiel diejenigen Elemente, die mit denen eines der voranstehenden Ausführungsbeispiele identisch sind, mit denselben Bezugszeichen versehen, so dass diesbezüglich auf die Ausführungen zu den voranstehenden Ausführungsbeispielen Bezug genommen werden kann.

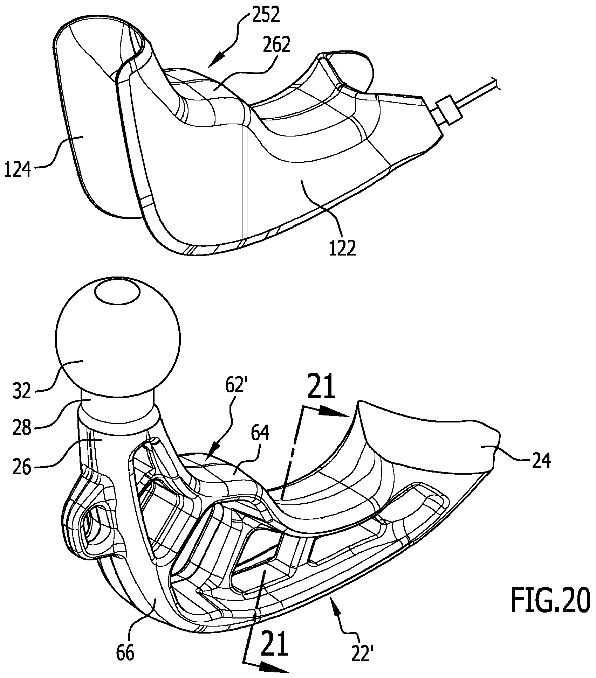

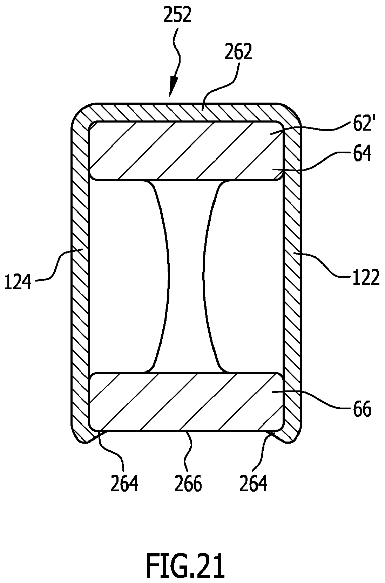

Bei einem zehnten Ausführungsbeispiel, dargestellt in Fig. 20, ist zur Abdeckung der Strebenstruktur 62' des Kugelhalses 22' eine Abdeckeinheit 252 vorgesehen, bei welcher die seitlichen Abdeckungen 122 und 124 durch ein die Längsstrebe 64 übergreifendes und die Abdeckungen 122 und 124 miteinander verbindendes Mittelelement 262 miteinander verbunden sind, welches vorzugsweise die Längsstrebe 64 über ihre ganze Erstreckung zwischen dem ersten Endbereich 24 und dem zweiten Endbereich 26 überdeckt und welches vorzugsweise einstückig mit den Abdeckungen 122, 124 verbunden ist, so dass, wie in Fig. 21 dargestellt, die als Ganzes mit 252 bezeichnete Abdeckeinheit die Strebenstruktur 62' U-förmig im Bereich der ersten Längsstrebe 64 übergreift und seitlich mittels der Abdeckungen 122 und 124 umgreift, wobei die Abdeckungen 122 und 124 vorzugsweise endseitig mit Rastnasen 264 verbunden sind, die die Längsstrebe 66 in der Arbeitsstellung auf ihrer der Fahrbahn 34 zugewandten Unterseite 266 hintergreift und dadurch die Abdeckeinheit 252 an der Strebenstruktur 62' fixiert hält.

Eine derartige Abdeckeinheit 252 lässt sich im einfachsten Fall nur zum Abdecken der Strebenstruktur 62' einsetzen.

Im Übrigen sind bei dem zehnten Ausführungsbeispiel diejenigen Elemente, die mit denen eines der voranstehenden Ausführungsbeispiele identisch sind, mit denselben Bezugszeichen versehen, so dass diesbezüglich auf die Ausführungen zu den voranstehenden Ausführungsbeispielen Bezug genommen werden kann.

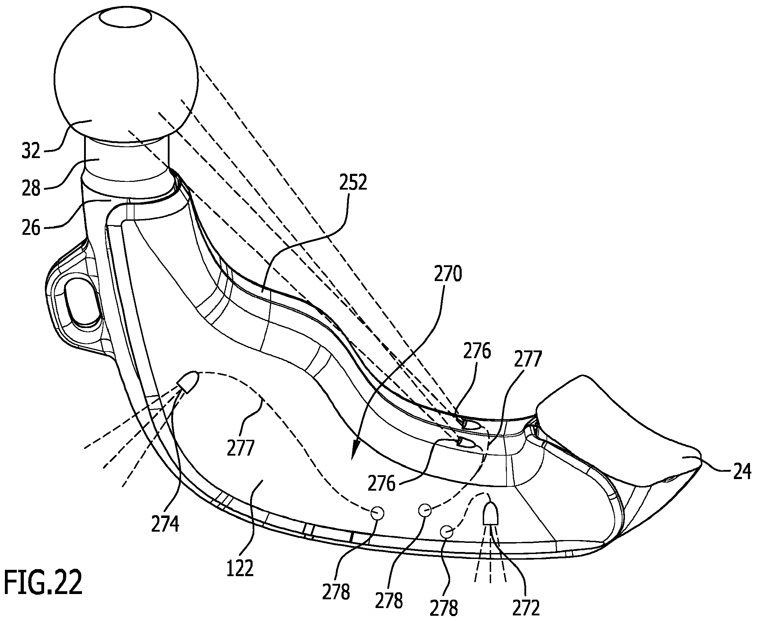

Bei einem elften Ausführungsbeispiel, dargestellt in Fig. 22 ist jedoch die Abdeckeinheit 252 mit einer eine Funktionseinheit darstellenden Beleuchtungseinheit 270 versehen, welche mehrere an der Abdeckeinheit 252 vorgesehene Lichtaustrittselementen 272, 274 und 276 aufweist.

Beispielsweise dienen die Lichtaustrittselemente 272 dazu, eine Fahrbahn 34 zu beleuchten.

Ferner können beispielsweise die Lichtaustrittselemente 274 dazu dienen, einen Teil der hinter dem Kraftfahrzeug 10 liegenden Fahrbahn 34 oder eine anzuhängenden Einheit zu beleuchten.

Ferner können beispielsweise die Lichtaustrittselemente 276 dazu dienen, die Kupplungskugel 32 anzuleuchten, was insbesondere bei einem Anhängen eines Anhängers eine große Erleichterung darstellt.

Die Lichtaustrittselemente 272, 274 und 276 können ihrerseits unmittelbar durch Leuchtdioden oder Leuchtdiodenarrays gebildet werden.

Vorteilhafterweise ist vorgesehen, die Lichtaustrittselemente 272, 274, 276 durch Endflächen polymerer Lichtleiter 277 zu bilden, in die, beispielsweise innerhalb von Freiräumen 94, 96, 98 der Strebenstruktur 62 mittels Lichtquellen 278, beispielsweise Leuchtdioden, Licht eingekoppelt wird, das dann an den Endflächen im Bereich der Lichtaustrittselemente 272, 274, 276 wieder austritt.

Im Übrigen sind bei dem elften Ausführungsbeispiel diejenigen Elemente, die mit denen eines der voranstehenden Ausführungsbeispiele identisch sind, mit denselben Bezugszeichen versehen, so dass diesbezüglich auf die Ausführungen zu den voranstehenden Ausführungsbeispielen Bezug genommen werden kann.

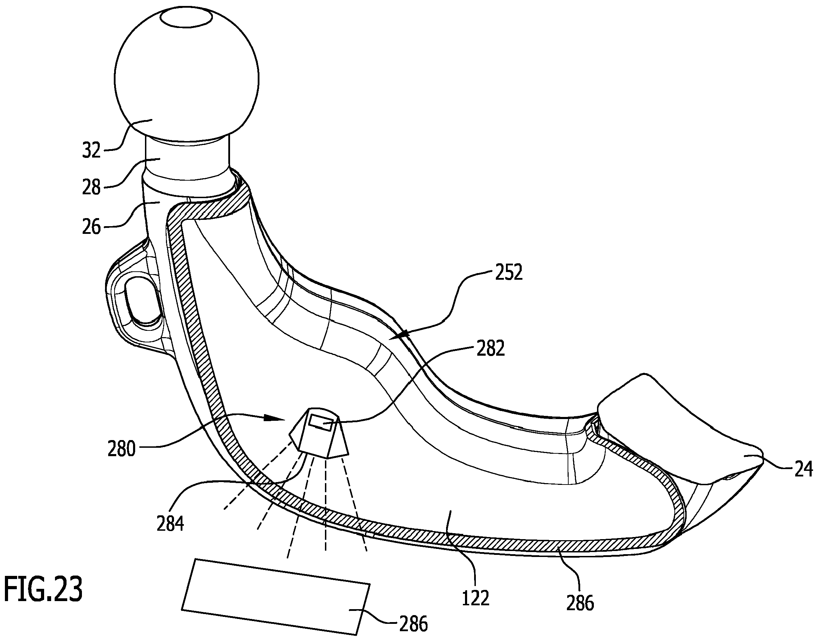

Alternativ zum elften Ausführungsbeispiel ist bei einem zwölften Ausführungsbeispiel, dargestellt in Fig. 23, die Abdeckeinheit 252 im Bereich der seitlichen Abdeckung 122 und der gegenüberliegenden Abdeckung 124 jeweils eine eine Funktionseinheit darstellende Projektionseinheit 280, mit einer Bilderzeugungseinheit 282, beispielsweise einem Display, und einem das erzeugte Bild projizierende Projektionselement 284 vorgesehen, aus welchem Licht austritt und eine Projektionsfläche 286, beispielsweise auf der Fahrbahn 34, ausleuchtet, welche Informationen, beispielsweise Informationen über die Belastung des Kugelhalses 22 oder über eine elektrische Verbindung zwischen dem Kraftfahrzeug 10 und einer an diesem angehängten Einheit für den Benutzer zur Verfügung stellt.

Darüber hinaus ist bei dem zwölften Ausführungsbeispiel noch eine Randkontur 286 der Abdeckeinheit 252 durch eine eine Funktionseinheit darstellende Beleuchtungseinheit 270' welche als Lichtaustrittselement eine eine Randkontur 288 des Kugelhalses 22 in Umrissen anzeigende Konturbeleuchtung 272' umfasst, welche den Vorteil bietet, dass dadurch für jedermann sichtbar ist, dass das Kraftfahrzeug mit einem in Arbeitsstellung stehenden Kugelhals 22 versehen ist, so dass beispielsweise Unfälle mit nicht sichtbarem Kugelhals 22 der Anhängekupplung, insbesondere in der Dunkelheit vermieden werden können.

Im Übrigen sind bei dem zwölften Ausführungsbeispiel diejenigen Elemente, die mit denen eines der voranstehenden Ausführungsbeispiele identisch sind, mit denselben Bezugszeichen versehen, so dass diesbezüglich auf die Ausführungen zu den voranstehenden Ausführungsbeispielen Bezug genommen werden kann.

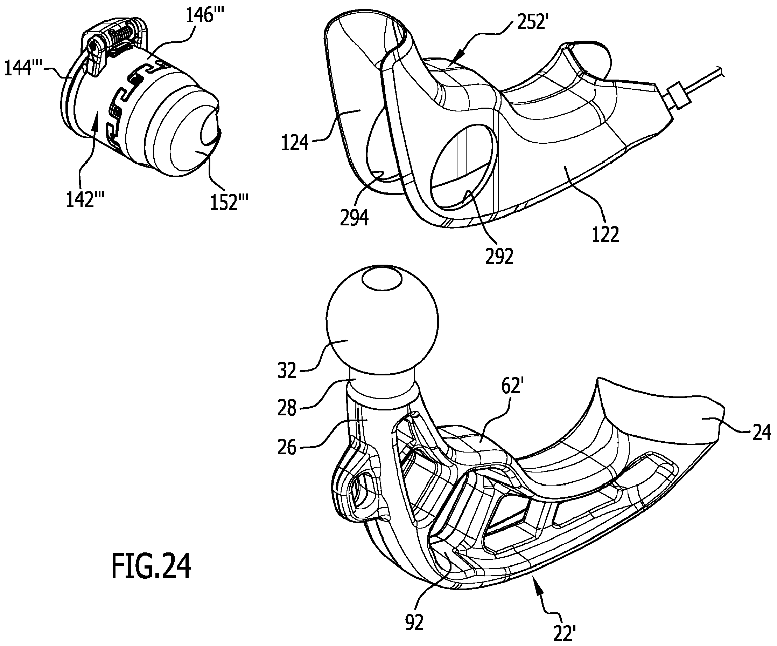

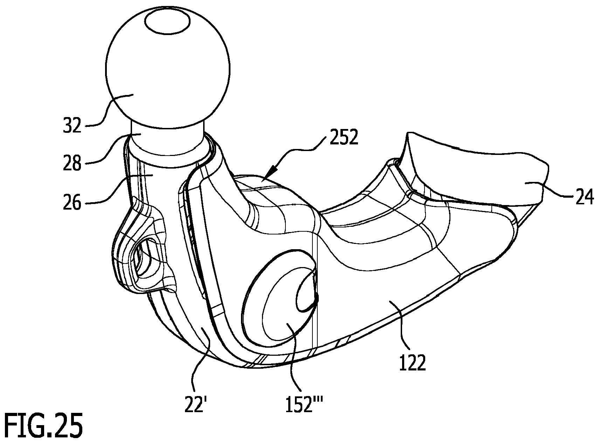

Bei einem dreizehnten Ausführungsbeispiel, dargestellt in den Fig. 24 und 25, ist die Abdeckeinheit 252' so ausgebildet, dass sie auch zur Aufnahme einer Kontakteinheit 142'" geeignet ist, wobei in diesem Fall die Abdeckungen 122 und 124 Durchbrüche 292 und 294 aufweisen, durch welche die Kontakteinheit 142'" mit dem Kontaktgehäuse 146'" und der Deckeleinheit 152'" dann hindurchsteckbar ist, wenn die Abdeckeinheit 252' auf die Strebenstruktur 62' aufgesetzt ist und diese umgekehrt U-förmig seitlich mit den Abdeckungen 122 und 124 umgreift.

Wird in diesem Fall die Kontakteinheit 142'" in den Durchbruch 294 eingeführt, so kann sich diese durch den Freiraum 92 der Strebenstruktur 62' hindurcherstrecken und mit der Deckeleinheit 152'" auch den Durchbruch 292 der Abdeckung 122 durchgreifen, so dass sich dadurch einerseits die Kontakteinheit 142'" an der Abdeckeinheit 252 fixieren lässt und andererseits die Möglichkeit besteht, die Abdeckeinheit 252' in ihrer Position relativ zur Strebenstruktur 262' des Kugelhalses 22' dadurch zu fixieren, dass die Kontakteinheit 142'" mit ihrem Kontaktgehäuse 146'" den als Durchlass ausgebildeten Freiraum 92 durchgreift und somit ein Abheben der Abdeckeinheit 252 und Lösen von der Strebenstruktur 62' verhindert.

Vorzugsweise lässt sich die Kontakteinheit 142'" mit dem Kontaktgehäuse 146'" und der Deckeleinheit 152'" relativ zu den Abdeckungen 122 und 124, insbesondere relativ zu den Durchbrüchen 292 und 294 durch Rastelemente oder beispielsweise auch eine Fügeverbindung dauerhaft fixieren, wie dies in Fig. 25 dargestellt ist.

Im Übrigen sind bei dem dreizehnten Ausführungsbeispiel diejenigen Elemente, die mit denen eines der voranstehenden Ausführungsbeispiele identisch sind, mit denselben Bezugszeichen versehen, so dass diesbezüglich auf die Ausführungen zu den voranstehenden Ausführungsbeispielen Bezug genommen werden kann.

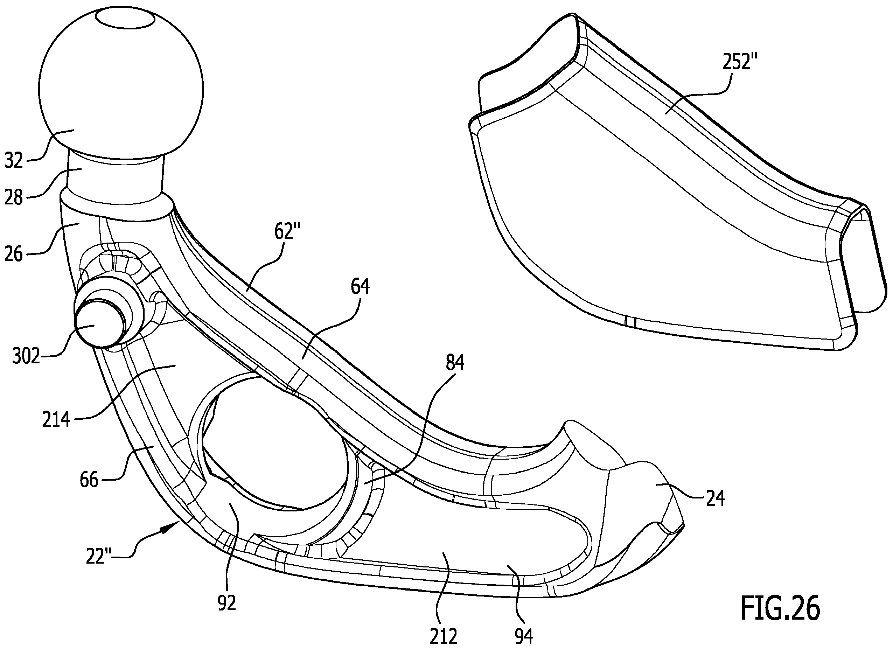

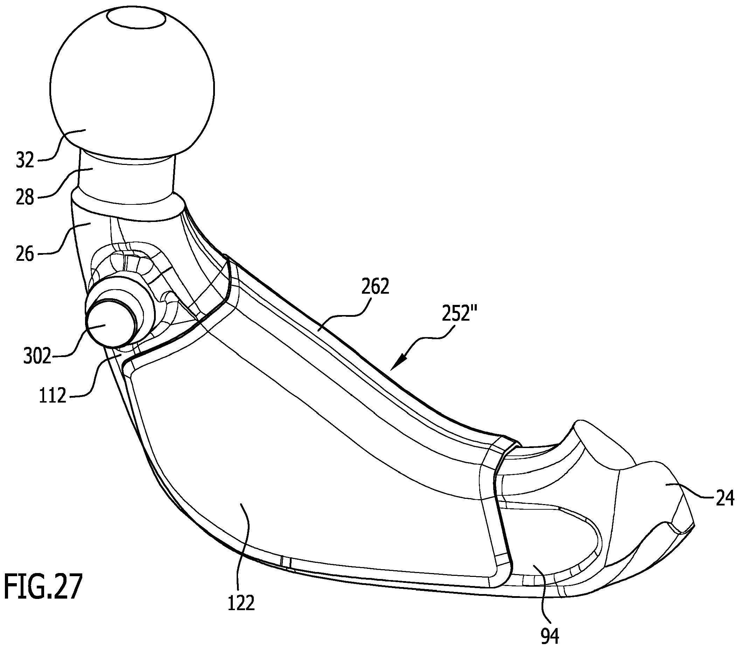

Bei einem vierzehnten Ausführungsbeispiel, dargestellt in den Fig. 26 und 27 ist die Strebenstruktur 62" sowohl mit der Längsstrebe 64 als auch der Längsstrebe 66 versehen, allerdings sind zwischen diesen Längsstreben Verbindungswände 212 und 214 vorgesehen, die die Längsstreben 64 und 66 miteinander verbinden, so dass lediglich der Freiraum 92 als Durchlass zwischen den Längsstreben 64 und 66 verbleibt.

Vorzugsweise besteht auch noch die Möglichkeit eine der Verbindungsstreben, beispielsweise die Verbindungsstrebe 84, zwischen den Längsstreben 64 und 66 vorzusehen.

Darüber hinaus sind am Endbereich 26 beiderseits, und zwar symmetrisch zur Mittelfläche 80 Tragzapfen 302 vorgesehen, welche beispielsweise gemäß der europäischen Patentanmeldung Nr. 2 759 421 ausgebildet sind.

Auch auf diese Strebenstruktur 62" ist die Abdeckeinheit 252" aufsetzbar, die allerdings insoweit modifiziert ist, als diese die Freiräume 94 und 96 sowie 112 und 114 lediglich teilweise abdeckt.

Im Übrigen sind bei dem vierzehnten Ausführungsbeispiel diejenigen Elemente, die mit denen eines der voranstehenden Ausführungsbeispiele identisch sind, mit denselben Bezugszeichen versehen, so dass diesbezüglich auf die Ausführungen zu den voranstehenden Ausführungsbeispielen Bezug genommen werden kann.

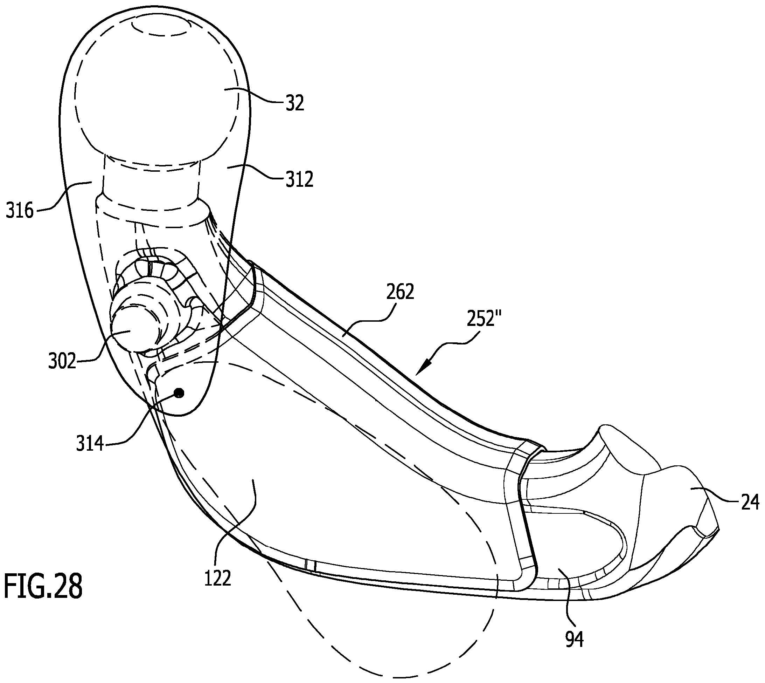

Bei einem fünfzehnten Ausführungsbeispiel, dargestellt in Fig. 28 ist an der Abdeckeinheit 252" insgesamt eine Schutzabdeckung 312 für die Kupplungskugel 32 und die Tragzapfen 302 vorgesehen, welche beispielsweise um eine Achse 314 relativ zur Abdeckeinheit 252" schwenkbar gelagert ist und in eine die Kupplungskugel 32 und die Tragzapfen 302 übergreifende Stellung schwenkbar ist oder zurückschwenkbar ist, in einer die Kupplungskugel 32 und den Tragzapfen 302 freigebende Stellung, so dass dadurch einerseits die Kupplungskugel 32 und die Tragzapfen 302 durch die Abdeckung so gekapselt sind, dass eine Bedienungsperson sich nicht an diesen stoßen und Verletzungen erleiden kann.

Vorzugsweise lässt sich dabei die Abdeckung wie in Fig. 28; stichpunktiert dargestellt, in eine Freigabestellung verschwenken, in welcher Seitenteile 316 der Schutzabdeckung 312 die Abdeckungen 122 und 124 übergreifen.

Im Übrigen sind bei dem fünfzehnten Ausführungsbeispiel diejenigen Elemente, die mit denen eines der voranstehenden Ausführungsbeispiele identisch sind, mit denselben Bezugszeichen versehen, so dass diesbezüglich auf die Ausführungen zu den voranstehenden Ausführungsbeispielen Bezug genommen werden kann.

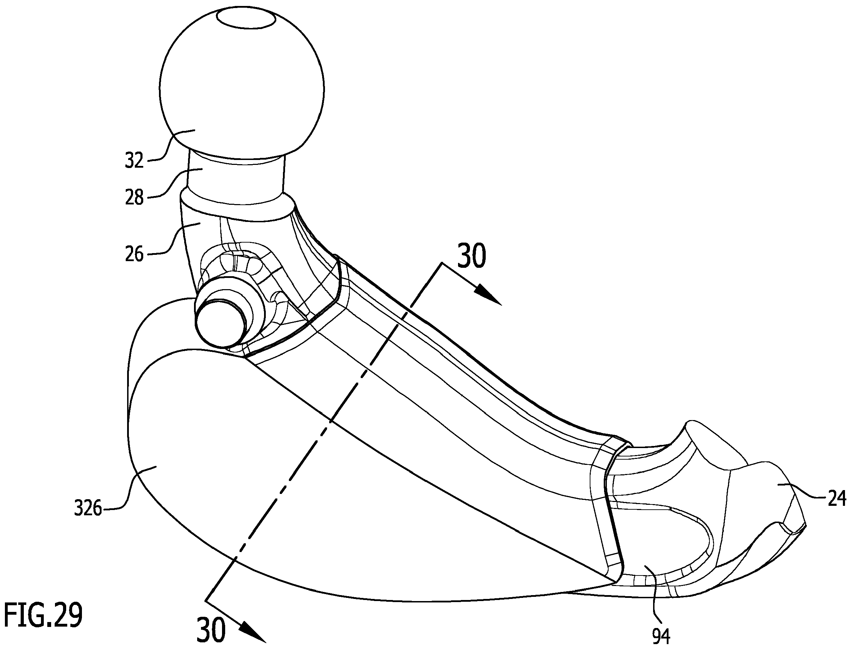

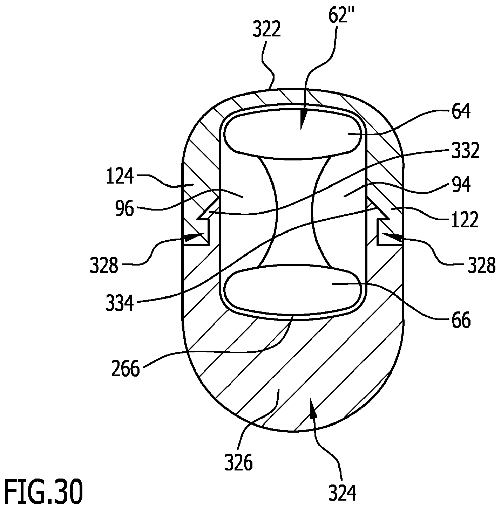

Bei einem sechzehnten Ausführungsbeispiel, dargestellt in Fig. 29 und Fig. 30 erfolgt ebenfalls eine Vollummantelung der Strebenstruktur 62", wobei eine Abdeckungseinheit 322 die obere Längsstrebe 64 und die seitlichen Freiräume 94 und 96 teilweise U-förmig übergreift, ähnlich der Abdeckeinheit 252, und außerdem eine die Längsstrebe 66 U-förmig übergreifende Abdeckung 324 die Abdeckeinheit 322 zur Bildung der seitlichen Abdeckungen 122, 124 ergänzt und auf der der Fahrbahn 34 zugewandten Unterseite 266 der Längsstrebe 66 aufliegt und dabei einen die Unterseite der Längsstrebe überdeckenden Stoßdämpferkörper 326 bildet, welcher durch ein elastisches Material der Abdeckeinheit 324 in diesem Bereich gebildet ist.

Somit bildet der Stoßdämpferkörper 326 einen Aufprallschutz für den Kugelhals 22", sofern das Kraftfahrzeug 10 gegen einen Gegenstand fährt oder gegebenenfalls mit dem Kugelhals 22 auf einer Bodenwelle der Fahrbahn 34 aufsitzt.

Vorzugsweise lassen sich dabei die Abdeckeinheiten 322 und 324 im Bereich der Seitenabdeckungen 122 und 124 mittels Rasteinheiten 328 miteinander verbinden, die beispielsweise an der Abdeckeinheit 324 angeordnete Rasthaken 332 aufweisen, welche in Rastausnehmungen 334 in der Abdeckeinheit 322 eingreifen.

Im Übrigen sind bei dem sechzehnten Ausführungsbeispiel diejenigen Elemente, die mit denen eines der voranstehenden Ausführungsbeispiele identisch sind, mit denselben Bezugszeichen versehen, so dass diesbezüglich auf die Ausführungen zu den voranstehenden Ausführungsbeispielen Bezug genommen werden kann.

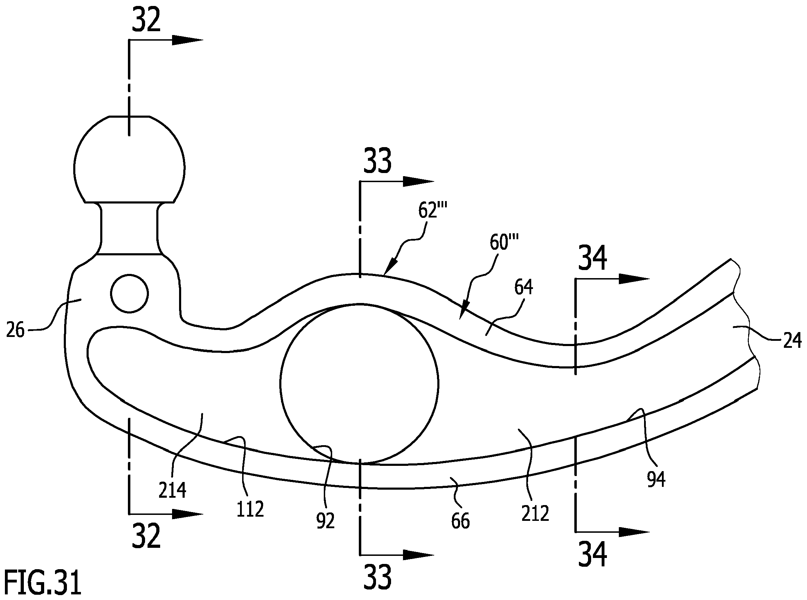

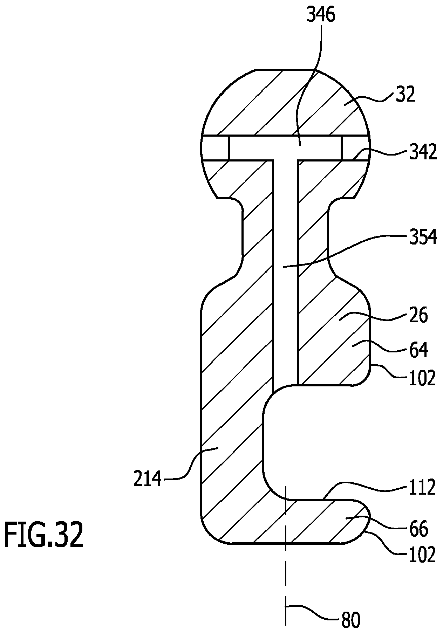

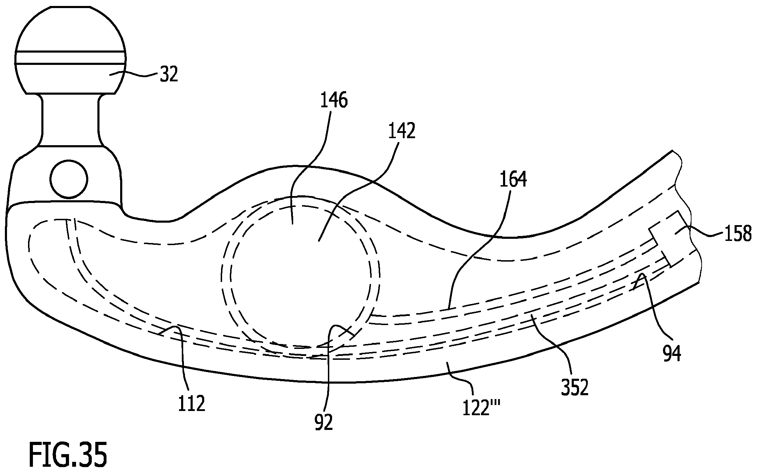

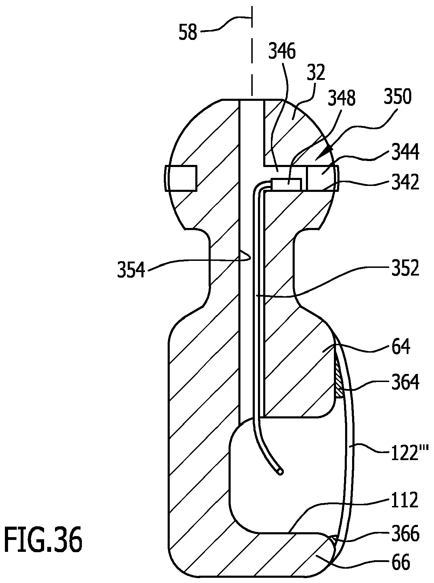

Bei einem siebzehnten Ausführungsbeispiel, dargestellt in den Fig. 31 bis 38 umfasst die Tragstruktur 60'" eine Strebenstruktur 62'" mit der ersten Längsstrebe 64 und der zweiten Längsstrebe 66, die sich von dem ersten Endbereich 24 zum zweiten Endbereich 26 erstrecken, wobei die Längsstreben 64, 66 durch massive Verbindungswände 212 und 214 miteinander verbunden sind, die allerdings asymmetrisch zu der durch die Gesamtform des Kugelhalses 22 definierte Mittelfläche 80 angeordnet sind, so dass auf einer Seite der Strebenstruktur 62'" die Verbindungswände 212 und 214 keinen Freiraum sondern eine Seitenwand der Strebenstruktur 62'" bilden, während auf der anderen Seite zwischen dem ersten Endbereich 24 und dem die Strebenstruktur 62'" durchsetzenden Freiraum 92 der Freiraum 94 liegt, welcher gegenüber einer seitlichen Außenkontur 102 der Längsstreben 64 und 66 zurückgesetzt liegt und sich zwischen der seitlichen Außenkontur 102 in diesem Fall vorgegeben durch die Streben 64, 66 und der Verbindungswand 212 erstreckt, wobei die Verbindungswand 212 von dem ersten Ende 24 bis zu dem Freiraum 92 verläuft.

Ferner liegt zwischen dem Freiraum 92 und dem zweiten Ende 26 die Verbindungswand 214, die ebenfalls asymmetrisch zur Mittelfläche 80 angeordnet ist und somit gegenüber der seitlichen Außenkontur 102 die Ausbildung des zurückgesetzten Freiraums 112 ermöglicht, der sich von der seitlichen Außenkontur 102 im Wesentlichen bis zur Verbindungswand 214 ausdehnt.

Somit bildet insgesamt die Strebenstruktur 62'" von dem ersten Endbereich 24 bis zum zweiten Endbereich 26 insoweit, als die Verbindungswände 212 und 214 vorgesehen sind, jeweils eine asymmetrische C-förmige Struktur, mit abgesehen von dem Freiraum 92 relativ zu einer der Außenkontur 102 zurückgesetzten Freiräumen 94 und 112.

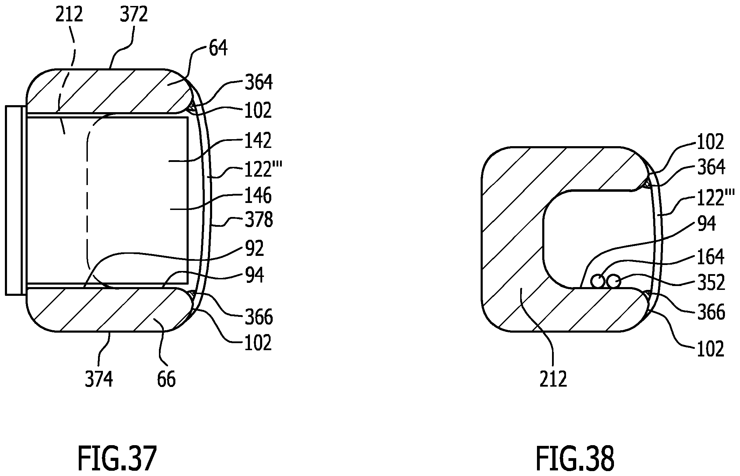

Wie in Fig. 37 dargestellt, erlaubt bei diesem Ausführungsbeispiel der Freiraum 92, der die Strebenstruktur 62'" durchsetzt, das Einsetzen der bereits beschriebenen Kontakteinheit 142 in diese, die in diesem Fall jedoch selbständig an den Längsstreben 64, 66 und insbesondere auch an den Verbindungswänden 212, 214 auf einer den Freiräumen 94 und 112 gegenüberliegenden Seite fixiert ist.

Darüber hinaus ist beispielsweise die Kupplungskugel 32 mit einer in dieser umlaufenden Nut 342 versehen, in welche beispielsweise ein Sensorring 344 eines Knickwinkelsensors eingesetzt ist.

Der Sensorring 344 wirkt ferner mit einer in einem Aufnahmearm 346 im Innern der Kupplungskugel 32 vorgesehenen Auswerteelektronik 348 zusammen, welche zusammen mit dem Sensorring 344 eine Sensoreinheit 350 bildet.

Von der Sensoreinheit 350 läuft eine Verbindungsleitung 352 durch einen koaxial zur Mittelachse 58 der Kupplungskugel 32 verlaufenden Kanal 354 bis in den Freiraum 112 und in dem Freiraum in Richtung des Freiraums 92 passiert die Kontakteinheit 142 und verläuft dann durch den Freiraum 94 bis zum ersten Endbereich 24.

Ferner läuft von der Kontakteinheit 142 noch die Leitung 164 bis zur Steckverbindung 158, die beispielsweise gleichzeitig auch eine Steckverbindung für die Leitung 352 darstellt.

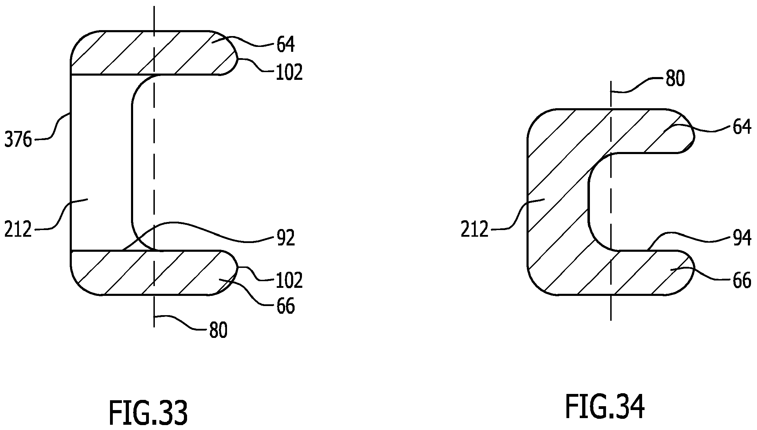

Zum Verschließen der Freiräume 92, 94 und 112 ist, wie in den Fig. 34 bis 37 dargestellt, eine Abdeckung 122'" vorgesehen, die einerseits aus einem Struktursteifen Material, beispielsweise aus Metallblech oder einem Metallformteil, ausgebildet ist und mit den Außenkonturen 102 der Längsstreben 64, 66 beispielsweise durch eine Klebeverbindung 364, 366 fest verbunden ist, so dass in diesem Fall die Abdeckung 122'" nicht nur ein struktursteifes Bauteil darstellt, sondern gleichzeitig ein zur Steifigkeit der Tragstruktur 60'" beitragendes Bauteil, das die durch die Freiräume 94, 112 geschaffene einseitig reduzierte Torsionssteifigkeit der Tragstruktur 60'" verbessert und aufgrund der stabilen Klebeverbindungen 364, 366 wiederrum eine rohrähnliche und somit torsionssteife Tragstruktur 60'" schafft, die der Torsionssteifigkeit einer umfangseitig geschlossenen Struktur sehr nahe kommt.

Bei einer derartigen, umfangseitig geschlossenen Struktur ist eine Oberseite 372 durch die erste Längsstrebe 64, eine Unterseite 374 durch die zweite Längsstrebe 66, eine Längsseite 376 durch die Verbindungswände 212 und 214 und eine gegenüberliegende Längsseite 378 durch die Abdeckung 122'" gebildet, die aufgrund ihrer Eigensteifigkeit und ihrer Verklebung mit den Längsstreben 64 und 66 einen Teil der Tragstruktur 60'" ist, so dass die Strebenstruktur 62'" nicht alleine die Steifigkeit des Kugelhalses 22 definiert, sondern die Kombination der Strebenstruktur 62'" mit der Abdeckung 122'" die Steifigkeit, insbesondere die Torsionssteifigkeit, des Kugelhalses 22 bestimmt.

## Patentansprüche

1. Anhängekupplung umfassend eine fahrzeugfest montierte Montageeinheit (42), eine an der Montageeinheit (42) gehaltene Lagereinheit (20), mit welcher ein erster Endbereich (24) einer Tragstruktur (60) eines Kugelhalses (22) verbunden ist, und ein an einem zweiten Endbereich (26) der Tragstruktur (60) des Kugelhalses (22) angeordnetes Kuppelelement (32), insbesondere ausgebildet als Kupplungskugel, wobei die Tragstruktur (60) in einer Arbeitsstellung eine einer Fahrbahn (34) abgewandte Oberseite, eine der Fahrbahn zugewandte Unterseite und beiderseits derselben zwischen diesen liegende Längsseiten umfasst, **dadurch gekennzeichnet, dass** die Tragstruktur (60) mit einer Verkleidung (120) versehen ist, welche mindestens eine der Seiten zumindest in einem zwischen dem ersten Endbereich (24) und dem zweiten Endbereich (26) liegenden Teilbereich mit einer Abdeckung (122, 124) überdeckt.

2. Anhängekupplung nach Anspruch 1, **dadurch gekennzeichnet, dass** die Verkleidung (120) als eine für die Tragstruktur (60) nicht tragende Verkleidung, ausgebildet ist und dass insbesondere die mindestens eine Abdeckung (122, 124) ein nichttragendes Element des Kugelhalses (22) ist.

3. Anhängekupplung nach einem der voranstehenden Ansprüche, **dadurch gekennzeichnet, dass** mindestens eine Funktionseinheit (146, 202) an der Verkleidung (120) gehalten ist, dass insbesondere die mindestens eine Funktionseinheit (146, 202) mittels der Abdeckung (122, 124) relativ zu der Tragstruktur (120) fixiert ist.

4. Anhängekupplung nach einem der voranstehenden Ansprüche, **dadurch gekennzeichnet, dass** an der mindestens einen Abdeckung (122, 124) eine zu einer Sensoreinheit und/oder einer Funktionseinheit geführte elektrische Leitung gehalten ist.

5. Anhängekupplung nach einem der voranstehenden Ansprüche, **dadurch gekennzeichnet, dass** an der mindestens einen Abdeckung (122, 124) ein elektronisches Kontaktverbinderelement (158, 184, 206) gehalten ist.

6. Anhängekupplung nach einem der Ansprüche 3 bis 5, **dadurch gekennzeichnet, dass** die mindestens eine Funktionseinheit (142, 202) mittels der Abdeckung (122, 124) relativ zu der Tragstruktur (60) fixiert ist, dass insbesondere mindestens eine Funktionseinheit (142, 202) ausschließlich an der mindestens einen Abdeckung (122, 124) gehalten ist.

7. Anhängekupplung nach einem der Ansprüche 3 bis 6, **dadurch gekennzeichnet, dass** die mindestens eine Funktionseinheit (142, 202) an mindestens zwei Abdeckungen (122, 124) gehalten ist, dass insbesondere die Funktionseinheit (142, 202) ein Verbindungselement zwischen den zwei Abdeckungen (122, 142) darstellt und dass insbesondere die Verbindungseinheit zwischen den Abdeckungen (122, 124) durch ein Gehäuse einer Funktionseinheit (142) gebildet ist.

8. Anhängekupplung nach einem der voranstehenden Ansprüche, **dadurch gekennzeichnet, dass** die mindestens eine Funktionseinheit (142, 202) in die mindestens eine Abdeckung (122, 124) integriert ist.

9. Anhängekupplung nach einem der voranstehenden Ansprüche, **dadurch gekennzeichnet, dass** die Funktionseinheit (142, 202) eine elektrische oder elektronische Funktionseinheit ist.

10. Anhängekupplung nach Anspruch 9, **dadurch gekennzeichnet, dass** die mindestens eine Funktionseinheit eine Kontakteinheit (142) für eine Verbindung zwischen einem elektrischen Fahrzeugnetz (168) und einem elektrischen Netz (140) einer am Kuppelelement (32) ankuppelbaren Einheit ist.

11. Anhängekupplung nach einem der voranstehenden Ansprüche, **dadurch gekennzeichnet, dass** die Funktionseinheit eine Betriebszustandserfassungseinheit (202) umfasst.

12. Anhängekupplung nach einem der voranstehenden Ansprüche, **dadurch gekennzeichnet, dass** die Funktionseinheit (202) eine Anzeigesteuerung umfasst.

13. Anhängekupplung nach einem der voranstehenden Ansprüche, **dadurch gekennzeichnet, dass** die Funktionseinheit eine Anzeigeeinheit (222) umfasst.

14. Anhängekupplung nach einem der voranstehenden Ansprüche, **dadurch gekennzeichnet, dass** die Funktionseinheit eine Beleuchtungseinheit (270) umfasst.

15. Anhängekupplung nach einem der voranstehenden Ansprüche, **dadurch gekennzeichnet, dass** die Funktionseinheit eine Projektionseinheit (280) umfasst.
